(19) Europäisches Patentamt
European Patent Office
Office européen des brevets

(11) EP 3 333 943 A1

(12) **EUROPEAN PATENT APPLICATION**
published in accordance with Art. 153(4) EPC

(43) Date of publication:
**13.06.2018 Bulletin 2018/24**

(21) Application number: **16833075.1**

(22) Date of filing: **03.08.2016**

(51) Int Cl.:
***H01M 4/139*** *(2010.01)* ***H01M 4/13*** *(2010.01)*
***H01M 4/133*** *(2010.01)* ***H01M 4/1393*** *(2010.01)*
***H01M 4/36*** *(2006.01)* ***H01M 4/48*** *(2010.01)*
***H01M 4/62*** *(2006.01)*

(86) International application number:
**PCT/JP2016/072800**

(87) International publication number:
**WO 2017/022796 (09.02.2017 Gazette 2017/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.08.2015 JP 2015154573**

(71) Applicant: **Mitsui Chemicals, Inc.**
**Minato-ku**
**Tokyo 105-7122 (JP)**

(72) Inventors:
- **NISHIURA, Katsunori**
**Chiba 299-0265 (JP)**
- **SARUYAMA, Masaki**
**Chiba 299-0265 (JP)**
- **SAKATA, Yoshihiro**
**Chiba 299-0265 (JP)**
- **ONISHI, Hitoshi**
**Chiba 299-0265 (JP)**
- **EDA, Akira**
**Chiba 299-0265 (JP)**
- **FANG, Nan**
**Tokyo 105-7122 (JP)**

(74) Representative: **Hoffmann Eitle**
**Patent- und Rechtsanwälte PartmbB**
**Arabellastraße 30**
**81925 München (DE)**

(54) **MIXTURE PASTE FOR NEGATIVE ELECTRODE OF LITHIUM ION SECONDARY BATTERY, NEGATIVE ELECTRODE FOR LITHIUM ION SECONDARY BATTERY, METHOD FOR PRODUCING NEGATIVE ELECTRODE FOR LITHIUM ION SECONDARY BATTERY, AND LITHIUM ION SECONDARY BATTERY**

(57) The objective of the present invention is to provide a mixture paste that is for the production of a negative electrode for a lithium ion secondary battery, that is not prone to cycle deterioration as a result of changes in volume, and that is not prone to decreases in initial charge/discharge efficiency as a result of reduction of a polyimide during charging. This objective is achieved by a mixture paste for a negative electrode of a lithium ion secondary battery comprising: a binder resin composition that comprises a polyamic acid and/or a corresponding polyimide, said polyamic acid being obtained from a diamine compound and a tetracarboxylic acid dianhydride, and said diamine compound comprising a diamine represented by formula (I) or (II); and a negative electrode active substance containing a silicon oxide represented by SiOx (0.5 ≤ x ≤ 1.5) and carbon particles.

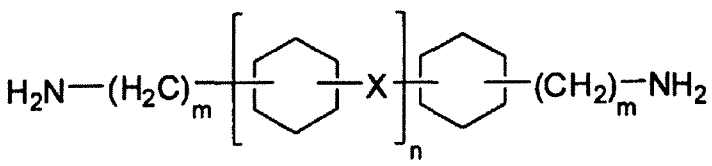

...(I)

EP 3 333 943 A1

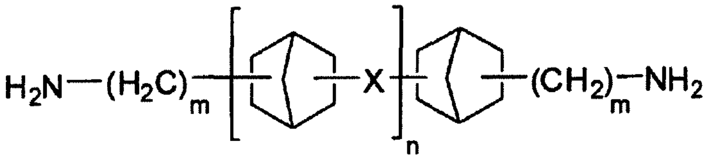

...(II)

## Description

### Technical Field

The present invention relates to a mixture paste for a negative electrode of a lithium-ion secondary cell, a negative electrode for a lithium-ion secondary cell, a method for producing a negative electrode for a lithium-ion secondary cell, and a lithium-ion secondary cell.

### Background Art

In recent years, as reduction in size and weight of electronic devices is in progress, there is a demand for secondary cells with high energy density as power sources of such electronic devices. Secondary cells are cells capable of charging and discharging, which repeatedly utilize chemical energy (as electric energy) generated from chemical reactions between a positive electrode active material and a negative electrode active material via an electrolyte. Among these secondary cells, lithium-ion secondary cells are in practical use as having high energy density. In a lithium-ion secondary cell, mainly used are a lithium-containing metal complex oxide, such as lithium-cobalt complex oxide, for a positive electrode active material, and a carbon material for a negative electrode active material.

Polyvinylidene fluoride (hereinafter, abbreviated as "PVdF") is frequently used as a binder for fixing an active material to a collector in a secondary cell, such as a lithium-ion secondary cell.

Next-generation negative electrode active materials which have high charge/discharge capacity far exceeding the theoretical capacity of carbon materials are being developed as the negative electrode active materials for lithium-ion secondary cells. In particular, negative electrode active materials using, e.g., silicon atoms or tin atoms are expected to be in practical use due to their high charge/discharge capacity. However, silicon atoms and tin atoms show very large volume change accompanying absorption and desorption of lithium ions, and thus these negative electrode active materials exhibit large degrees of expansion and contraction which accompany charge/discharge cycles. Therefore, when silicon atoms or tin atoms are used as a negative electrode active material along with, e.g., the conventional PVdF as a binder, active material particles may be pulverized or removed from the binder due to the expansion and contraction of the active material particles. Such pulverization and removal may cause cycle deterioration of the cell. Further, the binder of a lithium-ion secondary cell is required to have high heat resistance for resisting heat generation of the cell due to rapid ion migration during charging and discharging performed in a short amount of time. Accordingly, electrodes using a polyimide, which is excellent in mechanical strength and heat resistance, as a binder are proposed (PTLs 1 to 8).

However, lithium-ion secondary cells using a conventional polyimide as a binder may be excellent in cycle performance and heat resistance, but has a low initial charge/discharge efficiency (PTL 9).

### Citation List

### Patent Literature

PTL 1
Japanese Patent Application Laid-Open No. H10-312791
PTL 2
Japanese Patent Application Laid-Open No. 2011-40326
PTL 3
Japanese Patent Application Laid-Open No. 2010-238562
PTL4
Japanese Patent Application Laid-Open No. 2011-86480
PTL 5
WO2010/150513
PTL 6
WO2011/040308
PTL 7
Japanese Patent Application Laid-Open No. 2011-142068
PTL 8
Japanese Patent Application Laid-Open No. 2011-216320
PTL 9
Japanese Patent Application Laid-Open No. 2011-60676

Non-Patent Literature

NPL 1
J. Mater. Chem, 2010, 20, 5404-5410.

Summary of Invention

Technical Problem

It is considered that the initial charge/discharge efficiency of a lithium-ion secondary cell using a conventional polyimide is lowered because the polyimide is reduced during charging (NPL 1).

An object of the present invention is to provide, with respect to a negative electrode for a lithium-ion secondary cell, a mixture paste for producing the negative electrode which is less likely to cause lowering of the initial charge/discharge efficiency due to the reduction of a polyimide during charging, a negative electrode having such characteristics, and a lithium-ion secondary cell having such an negative electrode.

Solution to Problem

The first aspect of the present invention relates to a mixture paste for a negative electrode (hereinafter, also referred to as "negative electrode mixture paste") of a lithium-ion secondary cell as follows.

[1] A mixture paste for a negative electrode of a lithium-ion secondary cell, including:

a composition for a binder resin and a negative electrode active material,
in which:

the composition for the binder resin contains a polyamic acid or a polyimide each having a constituent unit derived from a diamine compound and a constituent unit derived from a tetracarboxylic dianhydride,
the constituent unit derived from the diamine compound including a constituent unit derived from a diamine compound represented by the following general formula (I) or (II):

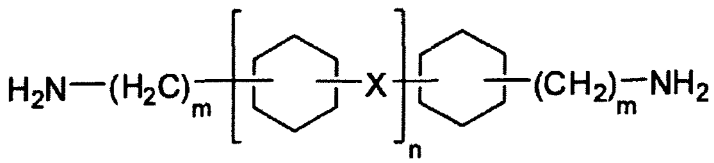
...(I)

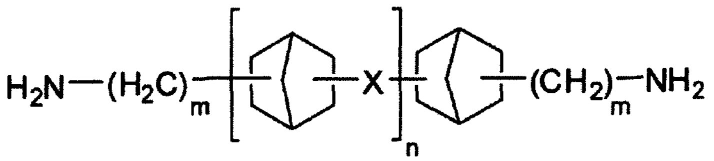
...(II)

(in which, in general formula (I) or (II),
n and two m's are each independently 0 or 1, and
-X- is a direct linkage, or a divalent group selected from the group consisting of -O-, -S-, $-SO_2-$, -CO-, and $-CH_2-$); and
the negative electrode active material contains a silicon oxide represented by $SiO_x$ ($0.5 \leq x \leq 1.5$) and carbon particles.

[2] The mixture paste according to [1], in which an amount of the silicon oxide blended in the negative electrode active material is 5 mass% or more and 70 mass% or less based on the total mass of the silicon oxide and the carbon particles.
[3] The mixture paste according to [1] or [2], in which the constituent unit derived from the tetracarboxylic dianhydride

includes a constituent unit derived from 3,3',4,4'-biphenyltetracarboxylic dianhydride.

[4] The mixture paste according to any one of [1] to [3], in which the composition for the binder resin further contains an alkali metal ion.

The second aspect of the present invention relates to a negative electrode for a lithium-ion secondary cell as follows.

[5] A negative electrode for a lithium-ion secondary cell, including:

a laminate containing a collector and a negative electrode-active material layer,
the negative electrode-active material layer containing a binder resin and a negative electrode active material, in which:

the binder resin contains a polyimide having a constituent unit derived from a diamine compound and a constituent unit derived from a tetracarboxylic dianhydride,
the constituent unit derived from the diamine compound including a constituent unit derived from a diamine compound represented by the following general formula (I) or (II):

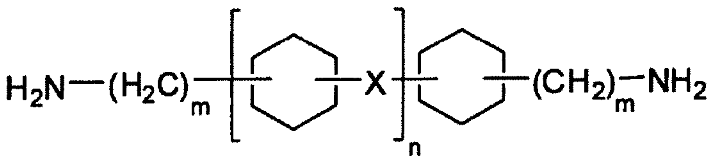
...(I)

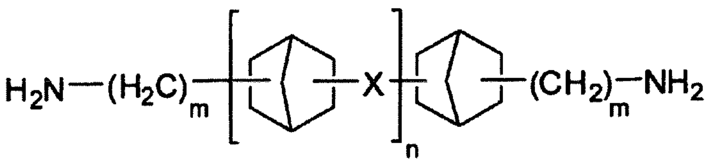
...(II)

(in which, in general formula (I) or (II),
n and two m's are each independently 0 or 1, and
-X- is a direct linkage, or a divalent group selected from the group consisting of -O-, -S-, $-SO_2-$, -CO-, and $-CH_2-$); and
the negative electrode active material contains a silicon oxide represented by $SiO_x$ ($0.5 \leq x \leq 1.5$) and carbon particles.

[6] The negative electrode according to [5], in which an amount of the silicon oxide blended in the negative electrode active material is 5 mass% or more and 70 mass% or less based on the total mass of the silicon oxide and the carbon particles.

[7] The negative electrode according to [5] or [6], in which, in the binder resin, the constituent unit derived from the tetracarboxylic dianhydride includes a constituent unit derived from 3,3',4,4'- biphenyltetracarboxylic dianhydride.

The third aspect of the present invention relates to a method for producing a negative electrode for a lithium-ion secondary cell as follows.

[8] A method for producing a negative electrode for a lithium-ion secondary cell, which includes:

applying the mixture paste according to any one of [1] to [4] on a collector, and
subjecting the collector having the mixture paste applied thereon to heating treatment.

[9] The method according to [8], in which the heating treatment is performed at a heating temperature of 200°C or more and 350°C or less.

The fourth aspect of the present invention relates to a lithium-ion secondary cell as follows.

[10] A lithium-ion secondary cell provided with a positive electrode, a negative electrode and an electrolyte, the positive and negative electrodes being capable of absorption and desorption of lithium ions,
in which the negative electrode is the negative electrode according to any one of [5] to [7].

Advantageous Effects of Invention

The present invention provides, with respect to a negative electrode for a lithium-ion secondary cell, a mixture

paste for producing the negative electrode which is less likely to cause lowering of the initial charge/discharge efficiency due to the reduction of a polyimide during charging, a negative electrode having such characteristics, and a lithium-ion secondary cell having such an negative electrode.

Description of Embodiments

Hereinafter, described in detail are a mixture paste for obtaining an negative electrode of the present invention, the negative electrode, and a lithium-ion secondary cell provided with the negative electrode.

1. Negative Electrode Mixture Paste for Lithium-Ion Secondary Cell

The mixture paste of the present invention for a negative electrode of a lithium-ion secondary cell contains a composition for a binder resin (hereinafter, also referred to as "binder resin composition") and a negative electrode active material. The mixture paste may further contain additional materials, such as a solvent and/or a conductive additive.

1-1. Binder Resin Composition

The binder resin composition contained in the negative electrode mixture paste for a lithium-ion secondary cell contains a polyimide or a polyamic acid which is the precursor of the polyimide. The binder resin composition may contain additional resins exclusive of the polyamic acid and the polyimide. Further, the binder resin composition may contain an alkali metal ion.

1-1-1. Polyamic Acid or Polyimide

The polyamic acid or the polyimide contained in the binder resin composition each contains a constituent unit derived from a diamine compound (hereinafter, also referred to as "diamine compound-derived constituent unit") and a constituent unit derived from a tetracarboxylic dianhydride (hereinafter, also referred to as "tetracarboxylic dianhydride-derived constituent unit").

1-1-1-1. Diamine Compound-derived Constituent Unit

The diamine compound-derived constituent unit contained in the polyamic acid or the polyimide is a constituent unit derived from a diamine compound represented by the following general formula (I) or (II).

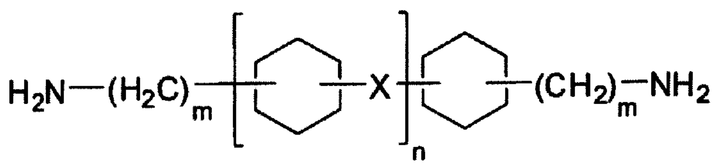
...(I)

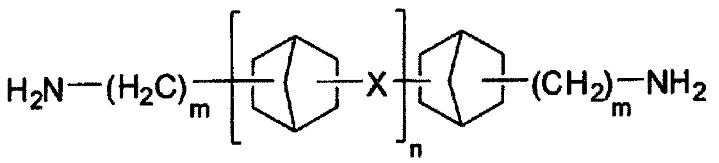
...(II)

In general formula (I) or (II), n and two m's are each independently 0 or 1, and -X- is a direct linkage, or a divalent group selected from -O-, -S-, $-SO_2-$, -CO-, and $-CH_2-$. In the present invention, "direct linkage" is defined as a binding form in which cyclohexane rings are directly covalently bonded, or carbon atoms each constitutes a norbornane ring are directly covalently bonded.

When either one or both of two m's are 1, the polyimide to be obtained may become more flexible, and thus an active material may be more securely bonded in an electrode of a lithium-ion secondary cell.

The diamine represented by general formula (I) is preferably a cyclohexanediamine (m=n=0) or a bis(aminomethyl)cyclohexane (m=1 and n=0), more preferably a bis(aminomethyl)cyclohexane, and even more preferably 1,4-bis( aminomethyl)cyclohexane.

The diamine represented by general formula (II) is preferably a norbomanediamine (m=n=0) or a bis(aminomethyl)norbornane (m=1 and n=0), more preferably a bis(aminomethyl)norbornane, and even more preferably 2,5-bis(aminomethyl)norbornane or 2,6-bis(aminomethyl)norbornane.

When the diamine represented by general formula (I) or (II) has geometrical isomers (such as a trans isomer and a cis isomer), the type and ratio of the isomers are not particularly limited.

In the polyamic acid or the polyimide, the proportion of the constituent unit derived from the diamine compound represented by general formula (I) or (II) is generally 20 mol% to 100 mol%, preferably 50 mol% to 100 mol%, and more preferably 70 mol% to 100 mol% based on the total moles of all the constituent units derived from diamine compounds.

When the proportion of the constituent unit derived from the diamine compound represented by general formula (I) or (II) becomes higher, the polyimide becomes more reduction resistant to lithium or an active material which forms an alloy with lithium. This increases the initial charge/discharge efficiency of a cell, and also the durability of the active material as a binder in an electrode.

The polyamic acid or the polyimide may each contain a constituent unit derived from diamine compound(s) exclusive of the diamine compounds represented by general formula (I) and (II) (hereinafter also simply referred to as "additional diamine compounds"). The proportion of the constituent unit derived from the additional diamine compound(s) is generally less than 80 mol%, preferably less than 50 mol%, and more preferably less than 30 mol% based on the all the constituent units derived from the diamine compounds included in the polyamic acid or the polyimide.

The first examples of the additional diamines are diamines having benzene ring(s). Examples of the diamines having benzene ring(s) include the following <1> to <6>:

<1> diamines having one benzene ring, such as p-phenylenediamine, m-phenylenediamine, p-xylylenediamine and m-xylylenediamine;

<2> diamines having two benzene rings, such as 3,3'-diaminodiphenylether, 3,4'-diaminodiphenylether, 4,4'-diaminodiphenylether, 3,3'-diaminodiphenylsulfide, 3,4'-diaminodiphenylsulfide, 4,4'-diaminodiphenylsulfide, 3,3'-diaminodiphenylsulfone, 3,4'-diaminodiphenylsulfone, 4,4'-diaminodiphenylsulfone, 3,3 '-diaminobenzophenone, 4,4'-diaminobenzophenone, 3,4'-diaminobenzophenone, 3,3'-diaminodiphenylmethane, 4,4'-diaminodiphenylmethane, 3,4'-diaminodiphenylmethane, 2,2-di(3-aminophenyl)propane, 2,2-di(4-aminophenyl)propane, 2-(3-aminophenyl)-2-(4-aminophenyl)propane, 2,2-di(3-aminophenyl)-1,1,1,3,3,3-hexafluoropropane, 2,2-di(4-aminophenyl)-1,1,1,3,3,3-hexafluoropropane, 2-(3-aminophenyl)-2-(4-aminophenyl)-1,1,1,3,3,3-hexafluoropropane, 1,1-di(3-aminophenyl)-1-phenylethane, 1,1 -di(4-aminophenyl)-1 -phenyl ethane and 1-(3-aminophenyl)-1-(4-aminophenyl)-1-phenylethane;

<3> diamines having three benzene rings, such as 1,3-bis(3-aminophenoxy)benzene, 1,3-bis(4-aminophenoxy)benzene, 1,4-bis(3-aminophenoxy)benzene, 1,4-bis(4-aminophenoxy)benzene, 1,3-bis(3-aminobenzoyl)benzene, 1,3 -bis(4-aminobenzoyl)benzene, 1,4-bis(3-aminobenzoyl)benzene, 1,4-bis(4-aminobenzoyl)benzene, 1,3-bis(3 -amino-a,a-dimethylbenzyl)benzene, 1,3-bis(4-amino-α,α-dimethylbenzyl)benzene, 1 ,4-bis(3 -amino-a,a-dimethylbenzyl)benzene, 1,4-bis(4-amino-α,α-dimethylbenzyl)benzene, 1,3-bis(3-amino-α,α-ditrifluoromethylbenzyl)benzene, 1,3-bis(4-amino-α,α-ditrifluoromethylbenzyl)benzene, 1,4-bis(3-amino-a,a-ditrifluoromethylbenzyl)benzene, 1,4-bis(4-amino-α,α-ditrifluoromethylbenzyl)benzene and 2,6-bis(3-aminophenoxy)benzonitrile, and 2,6-bis(3-aminophenoxy)pyridine;

<4> diamines having four benzene rings, such as 4,4'-bis(3-aminophenoxy)biphenyl, 4,4'-bis(4-aminophenoxy)biphenyl, bis[4-(3-aminophenoxy)phenyl]ketone, bis[4-(4-aminophenoxy)phenyl]ketone, bis[4-(3-aminophenoxy)phenyl] sulfide, bis[4-(4-aminophenoxy)phenyl] sulfide, bis[4-(3-aminophenoxy)phenyl]sulfone, bis[4-(4-aminophenoxy)phenyl]sulfone, bis[4-(3-aminophenoxy)phenyl]ether, bis[4-(4-aminophenoxy)phenyl] ether, 2,2-bis[4-(3-aminophenoxy)phenyl]propane, 2,2-bis[4-(4-aminophenoxy)phenyl]propane, 2,2-bis[3-(3-aminophenoxy)phenyl]-1,1,1,3,3,3 -hexafluoropropane and 2,2-bis[4-(4-aminophenoxy)phenyl]-1,1,1,3,3,3-hexafluoropropane;

<5> diamines having five benzene rings, such as 1,3-bis[4-(3-aminophenoxy)benzoyl]benzene, 1,3-bis[4-(4-aminophenoxy)benzoyl]benzene, 1,4-bis[4-(3-aminophenoxy)benzoyl]benzene, 1,4-bis[4-(4-aminophenoxy)benzoyl]benzene, 1,3-bis[4-(3-aminophenoxy)-a,a-dimethylbenzyl]benzene, 1,3-bis[4-(4-aminophenoxy)-a,a-dimethylbenzyl]benzene, 1,4-bis[4-(3-aminophenoxy)-α,α-dimethylbenzyl]benzene, and 1,4-bis[4-(4-aminophenoxy)-α,α-dimethylbenzyl]benzene; and

<6> diamines having six benzene rings, such as 4,4'-bis[4-(4-aminophenoxy)benzoyl]diphenylether, 4,4'-bis[4-(4-amino-α,α-dimethylbenzyl)phenoxy]benzophenone, 4,4'-bis[4-(4-amino-α,α-dimethylbenzyl)phenoxy]diphenylsulfone and 4,4'-bis[4-(4-aminophenoxy)phenoxy]diphenylsulfone.

The second examples of the additional diamines include diamines having aromatic substituent(s), such as 3,3'-diamino-4,4'-diphenoxybenzophenone, 3,3 '-diamino-4,4'-dibiphenoxybenzophenone, 3,3'-diamino-4-phenoxybenzophenone and 3,3 '-diamino-4-biphenoxybenzophenone.

The third examples of the additional diamines include diamines having a spirobiindan ring, such as 6,6'-bis(3-aminophenoxy)-3,3,3',3'-tetramethyl-1,1'-spirobiindan, and 6,6'-bis(4-aminophenoxy)-3,3,3',3'-tetramethyl-1,1 '-spirobiindan.

The fourth examples of the additional diamines include siloxane diamines, such as 1,3-bis(3-aminopropyl)tetramethyldisiloxane, 1,3-bis(4-aminobutyl)tetramethyldisiloxane, $\alpha,\omega$-bis(3-aminopropyl)polydimethylsiloxane and $\alpha,\omega$-bis(3-aminobutyl)polydimethylsiloxane.

The fifth examples of the additional diamines include ethylene glycol diamines, such as bis(aminomethyl)ether, bis(2-aminoethyl)ether, bis(3-aminopropyl)ether, bis[2-(2-aminomethoxy)ethyl]ether, bis[2-(2-aminoethoxy)ethyl]ether, bis[2-(3-aminoprotoxy)ethyl]ether, 1,2-bis(aminomethoxy)ethane, 1,2-bis(2-aminoethoxy)ethane, 1,2-bis[2-(aminomethoxy)ethoxy]ethane, 1,2-bis[2-(2-aminoethoxy)ethoxy]ethane, ethylene glycol bis(3-aminopropyl)ether, diethylene glycol bis(3-aminopropyl)ether, and triethylene glycol bis(3-aminopropyl)ether.

The sixth examples of the additional diamines include alkylenediamines, such as ethylenediamine, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane and 1,12-diaminododecane.

The seventh examples of additional diamines include alicyclic diamines exclusive of the diamines represented by the above-described general formula (I) and (II), such as cyclobutanediamine, diaminooxybicycloheptane, diaminomethyloxybicycloheptane (including oxanorbornanediamine), isophoronediamine, diaminotricyclodecane, diaminomethyltricyclodecane and bis(aminocyclohexyl)isopropylidene.

1-1-1-2. Tetracarboxylic Dianhydride-derived Constituent Unit

The tetracarboxylic dianhydride-derived constituent unit is not particularly limited, and may be, for example, a constituent unit derived from a tetracarboxylic dianhydride having a tetravalent organic substituent Y having 4 to 27 carbon atoms, as shown in general formula (III).

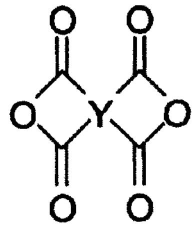

...(III)

The organic substituent Y is a monocyclic aromatic group, a condensed polycyclic aromatic group, or a non-condensed polycyclic aromatic group in which aromatic groups are mutually linked directly or via a linking group. In some cases, the non-condensed polycyclic aromatic group is preferred. The number of carbon atoms of organic substituent Y is preferably 6 to 27.

The tetracarboxylic dianhydride represented by general formula (III) is not particularly limited as long as the polyamic acid or the polyimide can be produced. The tetracarboxylic dianhydride may be, for example, an aromatic tetracarboxylic dianhydride or alicyclic tetracarboxylic dianhydride.

Examples of the aromatic tetracarboxylic dianhydrides include pyromellitic dianhydride, 3,3',4,4'-biphenyltetracarboxylic dianhydride, 3,3 ',4,4'-benzophenonetetracarboxylic dianhydride, bis(3,4-dicarboxyphenyl)ether dianhydride, bis(3,4-dicarboxyphenyl)sulfide dianhydride, bis(3,4-dicarboxyphenyl)sulfone dianhydride, bis(3,4-dicarboxyphenyl)methane dianhydride, 2,2-bis(3,4-dicarboxyphenyl)propane dianhydride, 2,2-bis(3,4-dicarboxyphenyl)-1,1,1,3,3,3-hexafluoropropane dianhydride, 1,3-bis(3,4-dicarboxyphenoxy)benzene dianhydride, 1,4-bis(3,4-dicarboxyphenoxy)benzene dianhydride, 4,4'-bis(3,4-dicarboxyphenoxy)biphenyl dianhydride, 2,2-bis[(3,4-dicarboxyphenoxy)phenyl]propane dianhydride, 2,3,6,7-naphthalenetetracarboxylic dianhydride, 1,4,5,8-naphthalenetetracarboxylic dianhydride 2,2',3,3'-benzophenonetetracarboxylic dianhydride, 2,2',3,3'-biphenyltetracarboxylic dianhydride, 2,2-bis(2,3-dicarboxyphenyl)propane dianhydride, 2,2-bis(2,3-dicarboxyphenyl)-1,1,1,3,3,3-hexafluoropropane dianhydride, bis(2,3-dicarboxyphenyl)ether dianhydride, bis(2,3-dicarboxyphenyl)sulfide dianhydride, bis(2,3-dicarboxyphenyl)sulfone dianhydride, 1,3-bis(2,3-dicarboxyphenoxy)benzene dianhydride, 1,4-bis(2,3-dicarboxyphenoxy)benzene dianhydride, 1,2,5,6-naphthalenetetracarboxylic dianhydride, 1,3-bis(3,4-dicarboxybenzoyl)benzene dianhydride, 1,4-bis(3,4-dicarboxybenzoyl)benzene dianhydride, 1,3-bis(2,3-dicarboxybenzoyl)benzene dianhydride, 1,4-bis(2,3-dicarboxybenzoyl)benzene dianhydride, 4,4'-isophthaloyldiphthalic anhydride, diazodiphenylmethane-3,3',4,4'-tetracarboxylic dianhydride, diazodiphenylmethane-2,2',3,3'-tetracarboxylic dianhydride, 2,3,6,7-thioxanthonetetracarboxylic dianhydride, 2,3,6,7-anthraquinonetetracarboxylic dianhydride, 2,3,6,7-xanthonetetracarboxylic dianhydride and ethylenetetracarboxylic dianhydride.

When the tetracarboxylic dianhydride has an aromatic ring, such as benzene ring, some or all of the hydrogen

atoms on the aromatic ring may be substituted by substituent(s) selected from fluoro group, methyl group, methoxy group, trifluoromethyl group, trifluoromethoxy group and the like. Furthermore, when the tetracarboxylic dianhydride has an aromatic ring, such as a benzene ring, depending on the purpose, some or all of the hydrogen atoms on the aromatic ring may be substituted by group(s) which serves as a crosslinking site and which is selected from ethynyl group, benzocyclobutene-4'-yl group, vinyl group, allyl group, cyano group, isocyanate group, nitrile group, isopropenyl group and the like, or a substituent having such a group. In addition, group(s), such as vinylene group, vinylidene group and/or ethynylidene group, which serves as a crosslinking site may be incorporated into the main chain skeleton of the tetracarboxylic dianhydride, preferably in an amount that does not impair moldability.

Some of the tetracarboxylic dianhydrides may be trimellitic anhydride, a hexacarboxylic trianhydride and/or an octacarboxylic tetraanhydride.

The tetracarboxylic dianhydrides may be used alone or in combination.

The polyamic acid or the polyimide each preferably contains a constituent unit derived from 3,3',4,4'- biphenyltetracarboxylic dianhydride among the above-described tetracarboxylic dianhydrides. It is more preferred that the polyamic acid or the polyimide each contain 50 mol% or more of the constituent unit derived from 3,3',4,4'-biphenyltetracarboxylic dianhydride based on the total mole amount of the tetracarboxylic dianhydrides constituting the polyamic acid or the polyimide.

1-1-1-3. Physical Properties of Polyamic Acid or Polyimide

The weight average molecular weight of the polyamic acid or the polyimide is preferably $1.0 \times 10^3$ to $5.0 \times 10^5$. When the weight average molecular weight is less than $1.0 \times 10^3$, the mechanical strength of a binder obtained by curing of the binder resin composition may decrease. When the weight average molecular weight exceeds $5.0 \times 10^5$, coating may become difficult. The weight average molecular weight of the polyimide or the polyamic acid which is the precursor of the polyimide can be measured by gel permeation chromatography (GPC).

The logarithmic viscosity of the polyamic acid or the polyimide is preferably in the range of 0.2 to 3.0 dL/g and more preferably in the range of 0.3 to 2.0 dL/g from the view point of dispersibility, applicability and/or the like of the negative electrode mixture paste.

The logarithmic viscosity of the polyamic acid or the polyimide may be measured by the following method. A binder resin composition containing the polyamic acid or the polyimide is diluted to have a concentration of 0.5 g/dL (with NMP solvent). The flow-down time (T1) of the diluted liquid is measured using automatic kinetic viscosity measuring device PVS manufactured by LAUDA at 35°C. The logarithmic viscosity is calculated by the following equation using the flow-down time (T0) of a blank (NMP).

$$\text{Logarithmic Viscosity [dL/g]} = \{\ln(T1 / T0)\} / 0.5$$

1-1-1-4. Content of Polyamic Acid or Polyimide

The content of the polyamic acid or the polyimide based on the total of the binder resin composition is preferably 50 mass% or more, more preferably 70 mass% or more, and even more preferably 90 mass%. A content of the polyamic acid or the polyimide at or above a predetermined value enables a negative electrode-active material layer, which is obtained by using the binder resin composition, to have suitable binding properties and reduction resistant properties. The upper limit for the content of the polyamic acid or the polyimide may be 100 mass%.

1-1-1-5. Production of Polyamic Acid or Polyimide

The polyamic acid can be obtained from the reaction of a diamine compound represented by the above-described general formula (I) or (II) with a tetracarboxylic dianhydride in the presence of a solvent described below. Each of the diamine compounds and the tetracarboxylic dianhydrides may be used alone or in combination. The above-described additional diamine compound(s) may be contained in the solvent to react simultaneously. The tetracarboxylic dianhydride preferably contains the tetracarboxylic dianhydride represented by general formula (III), but may be other tetracarboxylic dianhydride(s).

The polyimide can be obtained from the dehydration condensation reaction of the polyamic acid upon heating at 150°C to 230°C. The dehydration condensation reaction may be performed in the presence or absence of a conventional catalyst, such as an acid, a tertiary amine or an anhydride, and/or under heating.

The solvent is preferably an aprotic polar solvent, and more preferably an aprotic amide solvent. Examples of the aprotic amide solvents include N,N-dimethylformamide, N,N-dimethylacetamide, N,N-diethylacetamide, N-methyl-2-pyrollidone, 1,3-dimethyl-2-imidazolidinone, N,N-diethylformamide, N-methylcaprolactam, hexamethylphosphoramide, tetramethylene sulfone, dimethyl sulfoxide, m-cresol, phenol, p-chlorophenol, 2-chloro-4-hydroxytoluene, diglyme, triglyme, tetraglyme, dioxane, γ-butyrolactone, dioxolane, cyclohexanone, cyclopentanone, dichloromethane, chloroform, 1,2-dichloroethane, 1,1,2-trichloroethane, dibromomethane, tribromomethane, 1,2-dibromoethane, and 1,1,2-tribromoethane. These solvents may be used alone or in combination.

Additional solvent(s) may be used together with the above-described solvent(s) as necessary. Examples of the additional solvents include benzene, toluene, o-xylene, m-xylene, p-xylene, mesitylene, 1,2,4-trimethylbenzene, o-cresol, m-cresol, p-cresol, o-chlorotoluene, m-chlorotoluene, p-chlorotoluene, o-bromotoluene, m-bromotoluene, p-bromotoluene, chlorobenzene, bromobenzene, methanol, ethanol, n-propanol, isopropyl alcohol and n-butanol.

The catalyst for producing the polyimide by the above-described method is preferably a tertiary amine. Specific examples of the tertiary amines include trimethylamine, trimethylamine (TEA), tripropylamine, tributylamine, triethanolamine, N,N-dimethylethanolamine, N,N-diethylethanolamine, triethylenediamine, N-methylpyrrolidine, N-ethylpyrrolidine, N-methylpiperidine, N-ethylpiperidine, imidazole, pyridine, quinoline and isoquinoline. At least one catalyst selected from the above tertiary amines is used. For shortening the reaction time as much as possible while using a small amount of the catalyst, the amount of the catalyst used is preferably 0.1 to 100 mol% and more preferably 1 to 10 mol% based on the tetracarboxylic dianhydride component.

It is preferred that the ratio between the molar amount of the charged tetracarboxylic dianhydride (M1) and the molar amount of the charged diamine compound (M2) satisfies the following: M1:M2 = 0.90:1.00 to 1.10:1.00. It is more preferred that M1:M2 is 0.92:1.00 to 1.08:1.00, and still more preferred that M1:M2 is 0.95:1.00 to 1.05:1.00.

The polyimide may be produced by other methods, such as a one-step method which uses a diisocyanate compound corresponding to a diamine compound represented by the above-described general formula (I) or (II), and a tetracarboxylic dianhydride represented by the above-described general formula (III).

The polyamic acid may contain, e.g., a silane coupling agent, such as aminopropyltrimethoxysilane, glycidoxypropyltrimethoxysilane, trimethoxyvinylsilane or trimethoxyglycidoxysilane, a triazine-based compound, a phenanthroline-based compound or a triazole-based compound, in an amount of 0.1 to 20 parts by mass based on the total amount of 100 parts by mass of the polyamic acid. The presence of the compound(s) may further increase adhesiveness to an active material and/or a collector.

1-1-2. Additional Resin

The binder resin composition may further contain additional resin(s) exclusive of the polyamic acid and the polyimide. Any resin exclusive of the polyamic acid and the polyimide may be used as long as the resin is compatible with the polyimide or the polyamic acid, however, a resin which does not dissolve in a carbonate, i.e., a main component of an electrolyte solution, is preferred. The presence of the additional resin(s) exclusive of the polyamic acid and the polyimide in the binder resin composition further increases the initial charge/discharge efficiency of a cell. Based on this perspective, the binder resin composition preferably further contains polyvinylpyrrolidone, polyacrylamide, a polyamide or a polyamide-imide. When the binder resin composition contains a polyamide or a polyamide-imide, the polyamide or polyamide-imide preferably has an alicyclic structure for further increasing the initial charge/discharge efficiency.

1-1-3. Alkali Metal Ion

The alkali metal ion is added as, e.g., a (mono)carboxylate salt for dispersing in the polyamic acid or the polyimide.

The presence of the alkali metal ion in the binder resin composition increases the permeability of lithium ion into a binder resin which is obtained by curing the binder resin composition. Therefore, resistance in a negative electrode of a lithium-ion secondary cell can be lowered when the binder resin composition of the present invention, which contains the alkali metal ion, is used as the binder resin of the negative electrode active material in the negative electrode. In particular, the binder resin obtained by curing the binder resin composition of the present invention may have higher electric resistance due to the polyimide therein as a main component. It is thus preferred to limit the increase in electric resistance by combining with the alkali metal ion.

The content of the alkali metal ion contained in the binder resin composition is preferably 4 to 20 mol% based on 100 mol% of the tetracarboxylic dianhydride.

1-2. Negative Electrode Active Material

The negative electrode active material contained in the negative electrode mixture paste for a lithium-ion secondary cell contains a silicon oxide represented by $SiO_x$ ($0.5 \leq x \leq 1.5$), and carbon particles. The surface of the silicon oxide may be coated with a carbon coating.

1-2-1. Silicon Oxide represented by $SiO_x$ ($0.5 \leq x \leq 1.5$)

In the present invention, $SiO_x$ ($0.5 \leq x \leq 1.5$) is a general formula representing a collective term for amorphous silicon oxides generally obtained using silicon dioxide ($SiO_2$) and metal silicon (Si) as raw materials. In $SiO_x$ ($0.5 \leq x \leq 1.5$), when x is less than 0.5, ratio of the Si phase becomes high and a change in volume during charging/discharging becomes too large, thereby lowering the cycle performance of a lithium-ion secondary cell. When x exceeds 1.5, the ratio of the Si phase becomes low and the energy density becomes lowered. The more preferred range of x is $0.7 \leq x \leq 1.2$.

In general, small particle diameter $D_{50}$ for the silicon oxide is preferred, but when the $D_{50}$ is too small, the particles may be aggregated and coarsened during the formation of the negative electrode. The $D_{50}$ refers to a particle diameter where an integrated value of a volume distribution in a particle diameter distribution measurement by a laser diffraction method corresponds to 50%. In other words, $D_{50}$ refers to a median diameter measured in volume basis. Typically, the $D_{50}$ of the silicon oxide is in the range of 1 $\mu$m to 15 $\mu$m, more preferably 2 $\mu$m to 8 $\mu$m. As described below, in the present invention, it is preferred that the $D_{50}$ of the silicon oxide satisfies a specific relationship with $D_{50}$ of specific carbon particles used simultaneously for preparing the negative electrode mixture paste. For the silicon oxide, a commercially available silicon oxide having a desirable $D_{50}$ may be used.

The amount of the silicon oxide blended in the negative electrode mixture paste is such that the blend proportion of the silicon oxide is 5 mass% to 70 mass%, preferably 5 mass% to 60 mass%, and more preferably 10 mass% to 50 mass% based on 100% by mass of the total mass of the silicon oxide and carbon particles described below, both of which constitute the negative electrode active material. In the case where the surface of the silicon oxide is coated with a carbon coating as described below, the total mass of the silicon oxide and the carbon coating is used as the mass of the silicon oxide. The lithium-ion secondary cell using the negative electrode active material having the blend proportion is advantageous for preventing the negative electrode capacity degradation caused by the volume change of the active material as compared to a lithium-ion secondary cell solely using the silicon oxide as the negative electrode active material. Therefore, the increase in resistance caused by a peeling between the active material and the binder is limited, and the lithium-ion secondary cell with a suitable cycle performance can be obtained.

1-2-2. Carbon Coating that coats Silicon Oxide Surface

The surface of the silicon oxide may be coated with a carbon coating. Coating the silicon oxide surface with the carbon coating can suitably form a conductive network in a negative electrode-mixture paste layer which includes the negative electrode active material, and also can improve load characteristics of the cell. The silicon oxide surface may be coated with the carbon coating by a thermal CVD treatment method at a temperature of 800°C or more and 1300°C or less in an atmosphere of an organic substance gas and/or steam. The thermal CVD method can form the carbon coating in an amount of generally 3 to 20 mass%, preferably 3 to 15 mass% and more preferably 4 to 10 mass% based on the silicon oxide. When the amount of the carbon coating is 20% by mass or less, the relative content of the silicon oxide in the negative electrode mixture paste becomes high and it becomes possible to maintain high capacity. When the amount of the carbon coating is 3% by mass or more, the silicon oxide has electron conductivity sufficient for achieving sufficient cell capacity. The time for the thermal CVD treatment is appropriately selected in view of the relationship with the amount of the coating carbon. The silicon oxide is changed (disproportionated) into a silicon-silicon oxide-based composite by the action of heat during the treatment.

Specifically, the silicon oxide in a powdered form is subjected carbon coating upon heating at a temperature of 600°C or more and 1300°C or less, preferably 700°C or more, more preferably 800°C or more, particularly preferably 900°C or more and 1200°C or less in an atmosphere containing a hydrocarbon gas under a flow of inert gas in a reactor heated at 800°C to 1300°C. In general, a higher treatment temperature enables the formation of a carbon coating having less residual impurities and containing carbon having high conductivity.

In the present invention, any hydrocarbon-based gas that can be thermally decomposed at the above-described heat treatment temperature to produce carbon (graphite) especially under a non-oxidizing atmosphere is suitably selected. Examples of such hydrocarbon-based gasses include hydrocarbons such as methane, ethane, ethylene, acetylene, propane, butane, butene, pentane, isobutane, hexane and cyclohexane; and aromatic hydrocarbons such as benzene, toluene, xylene, styrene, ethylbenzene, diphenylmethane, naphthalene, phenol, cresol, nitrobenzene, chlorobenzene, indene, coumarone, pyridine, anthracene and phenanthrene.

There is no particular limitation as long as the apparatus for the thermal CVD treatment is a reaction apparatus having a mechanism for heating a material to be treated in a non-oxidizing atmosphere. For example, an apparatus capable of treatment in a continuous manner or a batchwise manner can be used, and specifically the apparatus can be appropriately selected from a fluidized bed reaction furnace, a rotation furnace, a vertical moving bed reaction furnace, a tunnel furnace, a batch furnace, a rotary kiln and the like depending on its purpose.

1-2-3. Carbon Particles

There is no particular limitation for the carbon particles. Specific examples of the carbon particles include natural graphite, artificial graphite, hardly graphitizable carbon (hard carbon), easily graphitizable carbon (soft carbon), mesocarbon microbeads, particles constituted from graphite particles and carbonaceous layers on the surface thereof (i.e., carbon-coated graphite), and graphite particles with carbon fibers adhering thereto .

The particle diameter $D_{50}$ of the carbon particles is not particularly limited, and generally 1 $\mu$m or more. The $D_{50}$ refers to a particle diameter where an integrated value of a volume distribution in a particle diameter distribution measurement by a laser diffraction method corresponds to 50%, namely a median diameter measured in volume basis. The ratio of the particle diameter $D_{50}$ of the carbon particles to that of the silicon oxide is in the range of preferably 1.0 to 8.0, more preferably 1.5 to 6.5 and still more preferably more than 2 to less than 6. By setting the particle diameter $D_{50}$ of the carbon particles to the value the same as that of the silicon oxide or more, the volume change of the negative electrode-mixture paste layer accompanying charge/discharge cycles becomes small, and a peeling of the negative electrode-mixture paste layer is less likely to occur, for example. When the ratio is 8.0 or less, the specific surface area of the carbon particles does not become too large, and the capacity reduction due to a decomposition reaction of an electrolyte solution is less likely to occur.

The carbon particles may be in any shape, such as spherical-, substantially spherical- or flat-shape. In the present invention, particles having an aspect ratio of less than 10 are referred to as the carbon particles.

According to the present inventors' findings, initial charge/discharge efficiency is less likely to decrease in a cell which includes a binder resin containing a polyimide with a constituent unit derived from a diamine compound represented by the above-described general formula (I) or (II), and which includes a negative electrode active material containing the silicon oxide and the carbon particles.

The amount of the carbon particles in the negative electrode-mixture paste layer is preferably more than 30 mass% and 95 mass% or less, more preferably 40 to 95 mass% still more preferably 50 to 90 mass% based on 100% by mass of the total mass of the silicon oxide and the carbon particles.

The carbon particles are preferably a secondary aggregate where primary particles including the graphite material are aggregated or bonded. With respect to the shapes of the primary carbon particles, flat-shaped particles are desired. When flat-shaped carbon particles are used, good conductivity is maintained even after the charge/discharge cycle(s). Therefore, it becomes possible to prevent the increase in the electrode resistance, and prolong the cycle life of the lithium-ion secondary cell. Examples of the carbon particles constituted from flat-shaped primary carbon particles include MAG™.

The total pore volume of the carbon particles measured by the nitrogen gas adsorption method falls within the range of generally $1.0\times10^{-2}$ to $1.0\times10^{-1}$ $cm^3/g$, preferably $1.5\times10^{-2}$ to $9.0\times10^{-2}$ $cm^3/g$, and more preferably $2.0\times10^{-2}$ to $7.0\times10^{-2}$ $cm^3/g$. The average pore diameter of the carbon particles measured by the nitrogen gas adsorption method falls within the range of generally 20 to 50 nm, preferably 25 to 40 nm, and more preferably 25 to 35 nm. When at least either one of the total pore volume (v) and the average pore diameter (d) of the carbon particles falls within the above-described corresponding range, an electrolyte solution becomes more easily permeates into the active material, and suitable ion conductivity can be maintained. As a result, electrode resistance is limited, and the charge/discharge capacity and the load characteristics are improved. Since the carbon particles have pores, when the silicon oxide suffers volume expansion upon charging, the carbon particles absorb the amount of the volume expansion of the silicon oxide by elastic deformation therein and prevents the expansion of the electrode. Accordingly, increase in resistance caused by a peeling between the active material and the binder due to the volume change of the silicon oxide is prevented, and the cell exhibits a suitable cycle performance.

1-3. Solvent

The negative electrode mixture paste for a lithium-ion secondary cell may contain a solvent. The solvent is not particularly limited as long as the solvent is capable of uniformly dissolving or dispersing therein the binder resin composition for the lithium-ion secondary cell, the active material and the like. The solvent is preferably an aprotic polar solvent, and more preferably an aprotic amide solvent. Examples of the aprotic amide solvents include N,N-dimethylformamide, N,N-dimethylacetamide, N,N-diethylacetamide, N-methyl-2-pyrollidone and 1,3-dimethyl-2-imidazolidinone. These solvents may be used alone or in combination.

An additional solvent may be used together with the above-described solvent as necessary. Examples of the additional solvents include benzene, toluene, o-xylene, m-xylene, p-xylene, mesitylene, 1,2,4-trimethylbenzene, o-cresol, m-cresol, p-cresol, o-chlorotoluene, m-chlorotoluene, p-chlorotoluene, o-bromotoluene, m-bromotoluene, p-bromotoluene, chlorobenzene, bromobenzene, methanol, ethanol, n-propanol, isopropyl alcohol and n-butanol.

The amount of the solvent in the negative electrode mixture paste for a lithium-ion secondary cell is set as appropriate taking viscosity and/or the like of the mixture paste into consideration. The amount of the blended solvent

is 50 to 900 parts by mass and more preferably 65 to 500 parts by mass based on 100 parts by mass of a solid content contained in the mixture paste.

1-4. Conductive Additive

The negative electrode mixture paste for a lithium-ion secondary cell may contain a conductive additive. Conduction between the negative electrode active materials occurs by point contact. Conductivity within the negative electrode active material is thus not satisfactorily increased in some cases. The conductive additive has a function which reduces high electric resistance caused by point contact between particles of the negative electrode active material.

The conductive additive may be a carbon material. The carbon material is not particularly limited, and may be graphite, such as artificial graphite or natural graphite, carbon fiber (such as carbon nanotube or vapor grown carbon fiber) or a thermolysis product of an organic substance prepared under variety of thermolysis conditions. The carbon materials may be used alone or in combination.

Examples of the organic thermolysis products include coal coke; petroleum coke; carbide of coal pitch; carbide of petroleum pitch; carbide of the pitch oxidized; needle coke; pitch coke; carbide of, e.g., phenol resin and crystal cellulose; a carbon material obtained by partly graphitizing these carbides; furnace black; acetylene black; and pitch carbon fiber.

Among these, graphite is preferred as the conductive additive. In particular, preferred is artificial graphite produced by subjecting easily graphitizable pitch from various raw materials to a high temperature treatment, purified natural graphite, or a graphite subjected to a variety of surface treatments.

The negative electrode mixture paste for a lithium-ion secondary cell may contain a metal oxide, such as tin oxide, a sulfide, a nitride, lithium, or a lithium alloy, such as a lithium-aluminum alloy. These may be used alone or in combination, or may be used in combination with the above-described carbon material.

The content (mass ratio) of the conductive additive in the negative electrode mixture paste for a lithium-ion secondary cell is preferably 0.01 mass% or more, more preferably 0.05 mass% or more and still more preferably 0.1 mass% or more based on the total amount (mass) of a solid content. In general, the content is preferably 20 mass% or less, and more preferably 10 mass% or less.

1-5. Production of Negative Electrode Mixture Paste for Lithium-Ion Secondary Cell

The negative electrode mixture paste for a lithium-ion secondary cell can be produced by mixing, and agitating or kneading the binder resin composition for the lithium-ion secondary cell or a varnish containing the same and the negative electrode active material, and further as necessary, the conductive additive and/or the solvent. The following two methods are mentioned as methods for mixing the raw materials, but the present invention is not limited to these methods.

i) The negative electrode active material and the solvent are added to the binder resin composition for the lithium-ion secondary cell or a varnish containing the same, thereby obtaining an electrode mixture paste.

ii) The negative electrode active material is added to and kneaded with the binder resin composition for the lithium-ion secondary cell or a varnish containing the same. The solvent is added to and agitated with the resultant kneaded product, thereby obtaining an electrode mixture paste.

The agitation may be a normal agitation using an impeller or the like, or an agitation using a planetary centrifugal mixer. The kneading operation may be carried out by using a kneader or the like.

2. Negative Electrode for Lithium-Ion Secondary Cell

The negative electrode of the present invention for a lithium-ion secondary cell is a laminate of a collector and a negative electrode-active material layer. The negative electrode for a lithium-ion secondary cell may be a sheet electrode.

2-1. Negative Electrode-Active Material Layer

The negative electrode-active material layer is a cured product of the above-described negative electrode mixture paste for a lithium-ion secondary cell. The negative electrode-active material layer contains the negative electrode active material and the binder resin for binding the material, and may further contain an additional component (such as a conductive additive). The binder resin contains a polyimide obtained by heat curing the polyamic acid or the polyimide in the binder resin composition.

In the polyamic acid or the polyimide, the proportion of the constituent unit derived from the alicyclic diamine compound represented by general formula (I) or (II) is generally 20 mol% to 100 mol%, preferably 50 mol% to 100 mol%, and more preferably 70 mol% to 100 mol% based on the total moles of all the constituent units derived from diamine compounds.

The thickness of the negative electrode-active material layer is not particularly limited, and is preferably 5 μm or more, more preferably 10 μm or more. The thickness is preferably 200 μm or less, more preferably 100 μm or less, and still more preferably 75 μm or less. A too thin negative electrode-active material layer results in an electrode not suitable for practical use in view of the balance with the particle diameter of the active material. A too thick negative electrode-active material layer may result in unsatisfactory absorption and desorption function of Li at a high density current value.

The proportion of the binder resin (mass) is generally 0.1 mass% or more, preferably 1 mass% or more, and more preferably 5 mass% or more based on the mass of all components constituting the negative electrode-active material layer. The proportion is generally 80 mass% or less, preferably 60 mass% or less, more preferably 40 mass% or less, and particularly preferably 20 mass% or less. When the proportion of the binder resin is too low, the negative electrode active material cannot be satisfactorily maintained, and the mechanical strength of the negative electrode becomes unsatisfactory, thereby deteriorating cell characteristics, such as cycle performance. When the proportion of the binder resin is too high, cell capacity and/or conductivity may be lowered.

Any material other than the solvent is not removed from the reaction system upon curing of the negative electrode mixture paste for a lithium-ion secondary cell. Therefore, the amount ratio of each material other than the solvent in the negative electrode mixture paste for a lithium-ion secondary cell corresponds to the amount ratio of each respective material in the negative electrode-active material layer. The amount ratio of each respective material in the negative electrode-active material layer corresponds to the amount ratio of each material other than the solvent in the negative electrode mixture paste for a lithium-ion secondary cell. For the polyamic acid and the polyimide, the sum of the amounts of both materials before the reaction can be used as the amount of the polyimide after the reaction.

The surface of the negative electrode active material may be subjected to treatment using a silane coupling agent or the like. The silane coupling agent for treating the surface of the negative electrode active material preferably has an amino group or an epoxy group. Specific examples of the silane coupling agents containing an amino group include 3 -aminopropyltriethoxysilane, 3 -aminopropyltrimethoxysilane, γ-(2-aminoethyl)aminopropyltriethoxysilane, γ-(2-aminoethyl)aminopropyltrimethoxysilane, 3-aminopropylmethyldiethoxysilane, 3-aminopropylmethyldimethoxysilane, N-phenyl-γ-aminopropyltriethoxysilane and N-phenyl-γ-aminopropyltrimethoxysilane. Specific examples of the silane coupling agents containing an epoxy group include 2-(3,4-epoxycyclohexyl)ethyltriethoxysilane, 2-(3,4-epoxycyclohexyl)ethyltrimethoxysilane, 3 -glycidoxypropyltrimethoxysilane and 3-glycidoxypropyltriethoxysilane.

The amount of the silane coupling agent for treating the surface of the negative electrode active material is preferably 0.05 to 10 parts by mass based on 100 parts by mass of the negative electrode active material.

In the negative electrode-active material layer, it is preferred that the negative electrode active material is chemically bonded with a polyimide contained in the binder resin via the silane coupling agent. It is more preferred that the negative electrode active material is coated with the polyimide. The polyimide has high reduction resistant properties, and thus is resistant to electrolysis even in contact with the negative electrode active material. Accordingly, the coating of the negative electrode active material with the polyimide can prevent electrolysis of the binder resin, and increase initial charge/discharge efficiency.

Whether the negative electrode active material is chemically bonded to the polyimide via the silane coupling agent can be confirmed by detecting a reaction residue of the silane coupling agent present in the negative electrode-active material layer. The reaction residue of the silane coupling agent can be detected by, e.g., X-ray photoelectron spectroscopy.

2-2. Collector

The material of the collector in the negative electrode may be a metal material such as silicon and/or a silicon alloy, tin and/or its alloy, a silicon-copper alloy, copper, nickel, stainless steel, nickel-plated steel; or a carbon material such as carbon cloth or carbon paper.

When the collector of the negative electrode is made of a metal material, the collector may be in the form of, e.g., a metal foil, a metal column, a metal coil, a metal plate or a metal thin film. When the collector of the negative electrode is made of a carbon material, the collector may be in the form of, e.g., a carbon plate, a carbon thin film or a carbon column. The thickness of the collector is not particularly limited, and is generally 5 μm to 30 μm and preferably 9 μm to 20 μm.

2-3. Method for producing Negative Electrode for Lithium-Ion Secondary Cell

The negative electrode can be provided by applying the above-described negative electrode mixture paste on the collector, followed by heat curing the paste to obtain the negative electrode-active material layer.

The negative electrode mixture paste may be applied by screen printing, roll coating, slit coating or the like. An active material layer in a mesh form may be formed by applying the negative electrode mixture paste in a pattern.

In general, heat curing of the negative electrode mixture paste can be carried out under atmospheric pressure, but may be carried out under pressure or under vacuum. The atmosphere for heat drying is not particularly limited, but generally, air, nitrogen, helium, neon or argon is preferred, and nitrogen or argon which is an inert gas is more preferred.

The negative electrode mixture paste, which uses a resin composition containing a polyamic acid as a binder, is heat cured generally at a heating temperature of 150°C to 500°C for 1 minute to 24 hours to obtain a reliable negative electrode by a ring-closing reaction of the polyamic acid which is a polyimide precursor to become a polyimide. The heat curing is performed preferably at 200°C to 350°C for 5 minute to 20 hours. On the other hand, the negative electrode mixture paste, which uses a resin composition containing a polyimide as a binder, is heat cured generally at a heating temperature of 100°C to 250°C for 1 minute to 24 hours to obtain a reliable negative electrode. The heat curing is performed preferably at 120°C to 200°C for 5 minute to 20 hours.

3. Lithium-Ion Secondary Cell

A basic constitution of the lithium-ion secondary cell of the present invention is similar to that of a conventional lithium-ion secondary cell. A general lithium-ion secondary cell has a pair of electrodes (negative electrode and positive electrode) capable of absorption and desorption of lithium ions, a separator and an electrolyte.

3-1. Negative Electrode

The negative electrode in the lithium-ion secondary cell of the present invention is as described above.

3-2. Positive Electrode

The positive electrode may be a laminate of a collector and a positive electrode-active material layer. A material for the collector in the positive electrode is generally a metal material such as aluminum, stainless steel, nickel plating, titanium or tantalum; or a carbon material such as carbon cloth or carbon paper. Among these, the metal material is preferred, and aluminum is particularly preferred. When the collector is made of a metal, the collector may be in the form of, e.g., a metal foil, a metal column, a metal coil, a metal plate, a metal thin film, an expand metal, a punch metal or a foamed metal, and when the collector is made of a carbon material, the collector may be in the form of, e.g., a carbon plate, a carbon thin film or a carbon column. Among these, the metal thin film is preferred because it is currently used in industrial products. The thin film may be in a mesh form, as appropriate.

When the positive collector is a thin film, any value as the thickness thereof may be selected, but it is generally 1 $\mu$m or more, preferably 3 $\mu$m or more, and more preferably 5 $\mu$m or more. In addition, the thickness is generally 100 mm or less, preferably 1 mm or less, and more preferably 50 $\mu$m or less. When the positive collector is thinner than the above-descried range, its strength may become insufficient for the collector. On the other hand, when the positive collector is thicker than the above-descried range, there is a danger of lowering of handleability.

The positive electrode active material is not particularly limited as long as the material is capable of absorption and desorption of lithium. Any positive electrode active material generally used in the lithium-ion secondary cells may be utilized. Specific examples the positive electrode active materials include a lithium-manganese complex oxide (e.g., $LiMn_2O_4$), a lithium-nickel complex oxide (e.g., $LiNiO_2$), a lithium-cobalt complex oxide (e.g., $LiCoO_2$), a lithium-iron complex oxide (e.g., $LiFeO_2$), a lithium-nickel-manganese complex oxide (e.g., $LiNi_{0.5}Mn_{0.5}O_2$), a lithium-nickel-cobalt complex oxide (e.g., $LiNi_{0.8}Co_{0.2}O_2$), a lithium-nickel-cobalt-manganese complex oxide, a lithium-transition metal phosphate compound ($LiFePO_4$), and a lithium-transition metal sulfate compound (e.g., $Li_xFe_2(SO_4)_3$).

The positive electrode active materials may be used alone or in combination. The content of the positive electrode material in the positive electrode-active material layer is generally 10% by mass or more, preferably 30% by mass or more, and still more preferably 50% by mass or more. In general, the content is 99.9% by mass or less, preferably 99% by mass or less.

Although the binder resin for binding the positive electrode active material may be the binder resin obtained from the above-described binder resin composition, any other known binder resins may be selected and used. Examples of the known binder resins include inorganic compounds, such as silicates and water glass, Teflon™, polyvinylidene difluoride, and polymers having no unsaturated bond. With respect to the weight average molecular weight of the polymers, the lower limit is generally 10,000, preferably 100,000, and the upper limit is generally 3,000,000, preferably

1,000,000.

The proportion of the binder resin (mass) is generally 0.1 mass% or more, preferably 1 mass% or more, and more preferably 5 mass% or more based on the mass of all components constituting the positive electrode-active material layer. The proportion is generally 80 mass% or less, preferably 60 mass% or less, more preferably 40 mass% or less, and particularly preferably 10 mass% or less. When the proportion of the binder resin is too low, the positive electrode active material cannot be satisfactorily maintained, and the mechanical strength of a positive electrode becomes unsatisfactory, thereby deteriorating cell characteristics, such as cycle performance. When the proportion of the binder resin is too high, cell capacity and/or conductivity may be lowered.

The positive electrode-active material layer may contain a conductive material for improving the conductivity of the electrode. The conductive material is not particularly limited as long as the conductive material is capable of imparting conductivity to the active material by mixing in an appropriate amount, but is generally carbon powder such as acetylene black, carbon black and graphite, or a variety of metal material in the form of fibers, powder or a foil.

The thickness of the positive electrode-active material layer is generally about 10 to 200 μm.

The positive electrode can be obtained by forming a film on the collector from the positive electrode active material and the binder resin composition containing the binder resin.

In general, the positive electrode-active material layer is provided by dry mixing a positive electrode material and the binder resin, and further, as necessary, a conductive material, a thicker and/or the like, forming the resultant mixture into a sheet, followed by pressure bonding the sheet to a positive electrode collector. Alternatively, the positive electrode-active material layer is produced by dissolving or dispersing these materials into a liquid medium to form a paste, followed by applying and drying the paste on the positive electrode collector. The positive electrode-active material layer obtained by the application and drying of the paste on the positive electrode collector is preferably consolidated using a roller press or the like for increasing the filling density of the positive electrode active material therein.

The type of liquid medium for forming the paste is not particularly limited as long as it is a solvent in which the positive electrode active material, the binder resin, and the optional conductive material and thicker can dissolve or disperse. The liquid medium may be an aqueous solvent or an organic solvent.

Examples of the aqueous solvents include water and alcohols. Examples of the organic solvents include N-methylpyrollidone (NMP), dimethylformamide, dimethylacetamide, ethyl methyl ketone, cyclohexanone, methyl acetate, methyl acrylate, diethyltriamine, N,N-dimethylaminopropylamine, ethylene oxide, tetrahydrofuran (THF), toluene, acetone, dimethyl ether, dimethylacetamide, hexamethyl phosphoric amide, dimethyl sulfoxide, benzene, xylene, quinoline, pyridine, methylnaphthalene and hexane. In particular, when the aqueous solvent is used, a dispersant is used in addition to the thicker, and a paste is formed using latex, such as SBR. The solvents may be used alone or in combination with no limitation for the types and the ratio thereof.

3-3. Separator

In general, the separator is placed between the positive electrode and the negative electrode, thereby preventing a short circuit between the electrodes.

The separator is generally a porous body such as a porous film or a non-woven fabric. A porosity of the separator is appropriately selected depending on the permeability of electrons and ions and on the material of the separator, but is preferably 30 to 80% in general.

As the separator, materials having excellent ion permeability, such as a microporous film, a glass fiber sheet, a non-woven fabric or a woven fabric can be used. In view of resistance to organic solvent and hydrophobicity, polypropylene, polyethylene, polyphenylene sulfide, polyethylene terephthalate, polyethylene naphthalate, polymethyl pentene, polyamide or polyimide is used as the material for the separator. These materials may be used alone or in combination.

Polypropylene, which is an inexpensive resin, is generally used, however, for imparting reflow resistance to the lithium-ion secondary cell, it is preferred to use polypropylene sulfide, polyethylene terephthalate, a polyamide, a polyimide or the like, each of which has a thermal deformation temperature of 230°C or more.

The thickness of the separator is, for example, 10 to 300 μm.

3-4. Electrolyte

The electrolyte of the lithium-ion secondary cell may be a non-aqueous electrolyte solution prepared by dissolving a lithium salt in a non-aqueous solvent. The electrolyte may also be prepared in a form of a gel, a rubber, a solid sheet or the like by adding an organic polymer compound and/or the like to the non-aqueous electrolyte solution.

The non-aqueous electrolyte solution contains a lithium salt and a non-aqueous solvent. The lithium salt can be appropriately selected from known lithium salts. Examples of the lithium salts include halides such as LiCl and LiBr; perhalide salts such as $LiBrO_4$ and $LiClO_4$; inorganic fluoride salts such as $LiPF_6$, $LiBF_4$, and $LiAsF_6$; inorganic lithium salts such as lithium bis(oxalatoborate) $LiBC_4O_8$; and fluorine-containing organic lithium salts including perfluoroalkane

sulfonate salts such as $LiCF_3SO_3$ and $LiC_4F_9SO_3$; and perfluoroalkane sulfonate imide salts such as Li trifluorosulfone imide ($(CF_3SO_2)_2NLi$). The lithium salts may be used alone or in combination. The concentration of the lithium salt in the non-aqueous electrolyte solution is generally in the range of 0.5 M or more and 2.0 M or less.

Examples of the non-aqueous solvents include cyclic carbonates, such as ethylene carbonate (EC), propylene carbonate (PC), butylene carbonate (BC) and vinylene carbonate (VC), chain carbonates, such as dimethyl carbonate (DMC), diethyl carbonate (DEC), ethylmethyl carbonate (EMC) and dipropyl carbonate (DPC), aliphatic carboxylate esters, such as methyl formate, methyl acetate, methyl propionate and ethyl propionate, γ-lactones, such as γ-butyrolactone, chain ethers, such as 1,2-dimethoxyethane (DME), 1,2-diethoxyethane (DEE) and ethoxymethoxyethane (EME), cyclic ethers, such as tetrahydrofuran and 2-methyltetrahydrofuran, aprotoic organic solvents, such as dimethyl sulfoxide, 1,3-dioxolane, formamide, acetamide, dimethylformamide, dioxolane, acetonitrile, propylnitrile, nitromethane, ethylmonoglyme, phosphate triester, trimethoxymethane, dioxolane derivatives, sulfolane, methylsulfolane, 1,3-dimethyl-2-imidazolidinone, 3-methyl-2-oxazolidinone, propylene carbonate derivatives, tetrahydrofuran derivatives, ethyl ether, 1,3-propanesultone, anisole, dimethyl sulfoxide, N-methylpyrrolidone, butyldiglyme and methyltetraglyme. These solvents may be used alone or in combination.

Adding of an organic polymer compound to the electrolyte solution can prepare an electrolyte in a form of a gel, a rubber or a solid sheet. Examples of such organic polymer compounds include polyether polymer compounds, such as polyethylene oxide and polypropylene oxide; crosslinked polymers of polyether polymer compounds; vinyl alcohol polymer compounds, such as polyvinyl alcohol and polyvinyl butyral; insolubilized products of vinyl alcohol polymer compounds; polyepichlorohydrin; polyphosphazene; polysiloxane; vinyl polymer compounds, such as polyvinylpyrrolidone, polyvinylidene carbonate and polyacrylonitrile; polymeric copolymers, such as poly(ω-methoxyoligooxyethylene methacrylate), poly(ω-methoxyoligooxyethylene methacrylate-co-methyl methacrylate), and poly(hexafluoropropylene-vinylidene fluoride).

The electrolyte solution may further contain a film former. Specific examples of the film formers include carbonate compounds, such as vinylene carbonate, vinylethylene carbonate, vinylethyl carbonate and methylphenyl carbonate, fluorine-based carbonate compounds, such as fluoroethylene carbonate, difluoroethylene carbonate, trifluoromethylethylene carbonate, bis(trifluoromethyl)ethylene carbonate, 1-fluoroethylmethyl carbonate, ethyl 1-fluoroethyl carbonate, fluoromethylmethyl carbonate, bis(1-fluoroethyl) carbonate, bis(fluoromethyl) carbonate, ethyl 2-fluoroethyl carbonate, bis(2-fluoroethyl) carbonate, methyl 1,1,1-trifluoropropan-2-yl carbonate, ethyl 1,1,1-trifluoropropan-2-yl carbonate, methyl 2,2,2-trifluoroethyl carbonate, bis(1,1,1-trifluoropropan-2-yl) carbonate, bis(2,2,2-trifluoroethyl) carbonate, ethyl 3,3,3-trifluoropropyl carbonate and bis(3,3,3-trifluoropropyl) carbonate, alkene sulfides, such as ethylene sulfide and propylene sulfide; sultone compounds, such as 1,3-propanesultone and 1,4-butanesultone; acid anhydride, such as maleic anhydride and succinic anhydride.

When the electrolyte solution includes the film former, the film former content is generally 10 mass% or less, preferably 8 mass% or less, more preferably 5 mass% or less, and particularly preferably 2 mass% or less based on the total amount (mass) of the constituents of the electrolyte solution. An excessively high content of the film former may cause adverse effects on other cell characteristics, such as an increase in the initial irreversible capacity of lithium-ion secondary cell and a reduction in low temperature characteristics or rate characteristics.

3-5. Form of Lithium-Ion Secondary Cell

The lithium-ion secondary cell of the present invention may have any form. Examples of the forms for the lithium-ion secondary cell include a cylinder type in which sheet electrodes and a separator are provided in a spiral, a cylinder type having an inside-out structure in which pellet electrodes and a separator are combined, and a coin type in which pellet electrodes and a separator are laminated. Further, by housing the cell having such a form into an outer case, the cell may have any form such as a coin type, a cylinder type or a square type.

The lithium-ion secondary cell can be assembled by any appropriate procedure depending on the cell structure. For example, a cell can be produced by placing a negative electrode on an outer case, providing an electrolyte solution and a separator thereon, and placing a positive electrode to face the negative electrode, followed by swaging with a gasket and a sealing plate.

Examples

Hereinafter, the present invention will be described in detail with reference to examples, however, the scope of the present invention is not intended to be limited by these examples.

The abbreviations used in Examples and Comparative Examples are shown as follows.

14BAC: 1,4-bis(aminomethyl)cyclohexane
NBDA: norbornanediamine

mBP: 4,4'-bis(3-aminophenoxy)biphenyl
pPD: p-phenylenediamine
DMAc: dimethylacetamide
NMP: N-methyl-2-pyrollidone
BPDA: 3,3',4,4'-biphenyltetracarboxylic dianhydride
PVP: polyvinylpyrrolidone
PMDA: pyromellitic dianhydride

Methods for measuring characteristics in Examples are shown as follows.

<Solid Content Concentration>

A sample solution (the mass thereof is referred to as w1) was subjected to heat treatment in a hot-air dryer at 250°C for 60 minutes, and the mass after the heat treatment (which is referred to as w2) was measured. The solid content concentration [mass%] was calculated by the following equation.

$$\text{Solid content concentration [mass\%]} = (w_2 / w_1) \times 100$$

<Logarithmic Viscosity>

The sample solution was diluted to have a concentration of 0.5 g/dL (with NMP solvent) on the basis of the solid content concentration. The flow-down time (T1) of the diluted liquid was measured at 35°C using an automatic kinetic viscosity measuring device PVS manufactured by LAUDA. The logarithmic viscosity was calculated by the following equation using the flow-down time (T0) of a blank (NMP).

$$\text{Logarithmic viscosity [dL/g]} = \{\ln (T1 / T0)\} / 0.5$$

<Initial Charge/Discharge Efficiency of Negative Electrode>

The initial charge/discharge efficiencies of negative electrodes were evaluated using coin cells. A negative electrode having a diameter of 14.5 mm produced in each of Examples and Comparative Examples and a positive electrode having a diameter of 15 mm made of Li foil were used as the electrodes. The electrolyte solution used was a solution of $LiPF_6$ dissolved at a concentration of 1 mol/l in a mixed solvent of ethylene carbonate and diethyl carbonate (mixed at a volume ratio of 1:1). The separator used was a polypropylene porous film having a diameter of 16 mm and a film thickness of 25 μm.

These cells were, after left to stand at 25°C for 24 hours, discharged to 0.05V under a constant current at a measurement temperature of 25°C and at 0.05C, and then, discharged to 0.01C under a constant voltage. Subsequently, the cells were charged to 1.2V under a constant current at 0.05C in the CC mode. The discharge capacity during the charging/discharging was employed as the capacity during Li intercalation in the negative electrode, and the charge capacity was employed as the capacity during Li deintercalation. The initial charge/discharge efficiency was calculated by the following equation.

$$\text{Initial charge/discharge efficiency (\%)} = B / A * 100$$

A: Capacity during Li intercalation (mAh/g)
B: Capacity during Li deintercalation (mAh/g)

<Discharge Capacity Maintenance Rate>

<Production of Positive Electrode>

A solution having 3 parts by mass of polyvinylidene fluoride dissolved in NMP and 4 parts by mass of a conductive additive (DENKA BLACK manufactured by Denka Company Limited.) were added to and mixed with 93 parts by mass of $LiCo_{1/3}N_{i1/3}Mn_{1/3}O_2$ followed by kneading using a compound agitator for a cell (T.K. HIVIS MIX Model 2P-03 manufactured by PRIMIX Corporation), thereby obtaining a positive electrode mixture paste. The paste was uniformly applied on an aluminum foil having a thickness of 20 μm so that the mass of the positive electrode mixture per unit area became 22 $mg/cm^2$ after drying, and dried to form a positive electrode-mixture paste layer. The formed positive electrode-mixture paste layer was subjected to pressing at normal temperature using a roller pressing machine to obtain a positive electrode.

<Production of Cell>

A coin cell having the above-described negative electrode was produced for evaluating the cell characteristics of the cell. The negative electrode having a diameter of 14.5 mm and the positive electrode having a diameter of 13 mm were used as the electrodes. The electrolyte solution used was a solution of $LiPF_6$ dissolved at a concentration of 1 mol/l in a mixed solvent of ethylene carbonate and methyl ethyl carbonate (mixed at a volume ratio of 3:7). The separator used was a polypropylene porous film having a diameter of 16 mm and a film thickness of 25 μm.

The coin cell was, after left to stand at 25°C for 24 hours, charged to 4.2V at a measurement temperature of 25°C and at 0.05C, and further charged to a current value of 0.01C at a constant voltage of 4.2V. The cell was then discharged to 2.3V at 0.05C.

In second and preceding cycles, the cell was charged to 4.2V at 1C, further charged to a current value of 0.2C at a constant voltage of 4.2V, and then discharged to 2.3V at 1C. A charge/discharge cycle test was performed under the above-described conditions and a discharge capacity maintenance rate at 100th cycle was calculated by the following equation.

$$\text{Discharge capacity maintenance rate (\%)} = \text{Discharge capacity at 100th cycle} / \text{Discharge capacity at 10th cycle} \times 100$$

(Synthesis Example 1)

Into a five-neck separable flask equipped with a thermometer, a stirrer, a nitrogen inlet and a dropping funnel, 15.7 g (0.110 mol) of 14BAC and 198 g of DMAc as an organic solvent were added and stirred. The cis/trans ratio of 14BAC was 9/91. To the flask, 32.4 g (0.110 mol) of BPDA in a powdered form was charged, and the reaction vessel was placed in an oil bath, kept at 120°C, for 5 minutes. About three minutes after the charging of BPDA, a salt was precipitated. It was confirmed that the salt was quickly dissolved again. After removing the oil bath, the stirring was further performed at room temperature for 18 hours, thereby obtaining a varnish (polyamic acid varnish) of binder resin composition 1. The obtained varnish of binder resin composition 1 had a solid content concentration of 18 mass%, and a logarithmic viscosity of 0.94 dL/g.

(Synthesis Example 2)

Into a five-neck separable flask equipped with a thermometer, a stirrer, a nitrogen inlet and a dropping funnel, 18.5 g (0.12 mol) of NBDA and 155 g of NMP as an organic solvent were added and stirred. To the flask, 35.3 g (0.12 mol) of BPDA in a powdered form was charged, and 67 g of NMP was added. The reaction vessel was placed in an oil bath, kept at 80°C, for 5 minutes. A salt was precipitated in about 30 seconds and confirmed to be quickly dissolved again. After removing the oil bath, the stirring was further performed at room temperature for 18 hours, thereby obtaining a varnish of binder resin composition 2. The obtained varnish of binder resin composition 2 had a solid content concentration of 18 mass%, and a logarithmic viscosity of 0.47 dL/g.

(Synthesis Example 3)

Into a five-neck separable flask equipped with a thermometer, a stirrer, a nitrogen inlet and a dropping funnel, 32.44 g (0.3 mol) of pPD, 36.84 g (0.1 mol) of mBP and 532.7 g of NMP as a solvent were charged. The temperature of the solution was raised to 50°C, and the solution was stirred until pPD and mBP were dissolved. After the temperature of the solution was lowered to room temperature, 115.33 g (0.392 mol) of BPDA was fed over about 30 minutes. Further, 228.3 g of NMP was added, and the solution was stirred for 20 hours, thereby obtaining a varnish of binder resin composition 3. The obtained varnish of binder resin composition 3 had a solid content concentration of 18 mass%, and a logarithmic viscosity of 0.89 dL/g.

(Synthesis Example 4)

Into a five-neck separable flask equipped with a thermometer, a stirrer, a nitrogen inlet and a dropping funnel, 11.73 g (0.0825 mol) of 14BAC and 225 g of DMAc as an organic solvent were charged and stirred. The cis/trans ratio of 14BAC was 9/91. To the flask, 32.4 g (0.110 mol) of BPDA in a powdered form was charged, and the reaction vessel was placed in an oil bath, kept at 120°C, for 5 minutes. About three minutes after the charging of BPDA, a salt was precipitated. It was confirmed that the salt was quickly dissolved again. After the oil bath was removed, and the temperature inside the system was lowered to near room temperature, 10.13 g (0.0275 mol) of mBP was fed over 10 minutes. The stirring was further performed at room temperature for 18 hours, thereby obtaining a varnish (polyamic acid varnish) of binder resin composition 4. The obtained varnish of binder resin composition 4 had a solid content concentration of 18 mass%, and a logarithmic viscosity of 1.2 dL/g.

(Synthesis Example 5)

Into a five-neck separable flask equipped with a thermometer, a stirrer, a nitrogen inlet and a dropping funnel, 7.82 g (0.0550 mol) of 14BAC and 223 g of NMP as an organic solvent were charged and stirred. The cis/trans ratio of 14BAC was 9/91. To the flask, 32.4 g (0.110 mol) of BPDA in a powdered form was charged, and the reaction vessel was placed in an oil bath, kept at 120°C, for 5 minutes. About three minutes after the charging of BPDA, a salt was precipitated. It was confirmed that the salt was quickly dissolved again. After the oil bath was removed, and the temperature inside the system was lowered to near room temperature, 20.26 g (0.0550 mol) of mBP was fed over 10 minutes. The stirring was further performed at room temperature for 18 hours, thereby obtaining a varnish (polyamic acid varnish) of binder resin composition 5. The obtained varnish of binder resin composition 5 had a solid content concentration of 18 mass%, and a logarithmic viscosity of 1.0 dL/g.

(Synthesis Example 6)

Into a five-neck separable flask equipped with a thermometer, a stirrer, a nitrogen inlet and a dropping funnel, 32.7 g (0.15 mol) of PMDA and 90 g of NMP were charged, and stirred at room temperature in a nitrogen stream. To the flask, a mixed solution of 23.1 g (0.15 mol) of NBDA and 40 g of NMP was slowly added dropwise over 60 minutes. Subsequently, the temperature of the solution was raised to 60°C and the solution was stirred for 10 hours, thereby obtaining a varnish (polyamic acid varnish) of binder resin composition 6. The obtained varnish of binder resin composition 6 had a solid content concentration of 27 mass%, and a logarithmic viscosity of 0.70 dL/g.

(Synthesis Example 7)

To 92 g of NMP, 18 g of PVP was added by a small amount while stirring, thereby obtaining 18 mass% PVP solution. To 40 g of the varnish of binder resin composition 1, 10 g of the 18 mass% PVP solution was added and stirred, thereby obtaining a varnish of binder resin composition 7. The obtained varnish of binder resin composition 7 had a solid content concentration of 18 mass%.

[Example 1]

A varnish containing 5 parts by mass of binder resin composition 1 and 3 parts by mass of conductive additive (VGCF-H manufactured by Showa Denko K. K.) were kneaded using a compound stirrer for cells (T.K. HIVIS MIX model 2P-03 manufactured by PRIMIX Corporation). To the obtained paste, 92 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was added thereto, and the mixture was further kneaded to prepare a negative electrode mixture paste. The mass ratio between the silicon oxide and the carbon particles, both of which constitute an active material, was 20:80.

The negative electrode mixture paste was applied using an applicator onto copper foil (thickness: 20 $\mu$m) which served as a collector, and heat treated for curing under a nitrogen atmosphere at 300°C for 10 minutes, thereby obtaining a negative electrode having the collector and a negative electrode-mixture paste layer being laminated therein. The mass of the active material in the negative electrode-mixture paste layer after drying was 4.0 mg/cm$^2$ per unit area.

A coin cell was produced using the obtained negative electrode, and the initial charge/discharge efficiency and the discharge capacity maintenance rate thereof were evaluated.

[Example 2]

A varnish containing 10 parts by mass of binder resin composition 2 and 3 parts by mass of conductive additive (VGCF-H manufactured by Showa Denko K. K.) were kneaded using a compound stirrer for cells (T.K. HIVIS MIX model 2P-03 manufactured by PRIMIX Corporation). To the obtained paste, 87 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was added thereto, and the mixture was further kneaded to prepare a negative electrode mixture paste. The mass ratio between the silicon oxide and the carbon particles, both of which constitute an active material, was 30:70.

The negative electrode mixture paste was applied using an applicator onto copper foil (thickness: 20 μm) which served as a collector, and heat treated for curing under a nitrogen atmosphere at 300°C for 10 minutes, thereby obtaining a negative electrode having the collector and a negative electrode-mixture paste layer being laminated therein. The mass of the active material in the negative electrode-mixture paste layer after drying was 3.8 $mg/cm^2$ per unit area.

A coin cell was produced using the obtained negative electrode, and the initial charge/discharge efficiency thereof was evaluated.

[Example 3]

A varnish containing 10 parts by mass of binder resin composition 1 and 3 parts by mass of conductive additive (VGCF-H manufactured by Showa Denko K. K.) were kneaded using a compound stirrer for cells (T.K. HIVIS MIX model 2P-03 manufactured by PRIMIX Corporation). To the obtained paste, 87 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was added thereto, and the mixture was further kneaded to prepare a negative electrode mixture paste. The mass ratio between the silicon oxide and the carbon particles, both of which constitute an active material, was 60:40.

The negative electrode mixture paste was applied using an applicator onto copper foil (thickness: 20 μm) which served as a collector, and heat treated for curing under a nitrogen atmosphere at 300°C for 10 minutes, thereby obtaining a negative electrode having the collector and a negative electrode-mixture paste layer being laminated therein. The mass of the active material in the negative electrode-mixture paste layer after drying was 2.0 $mg/cm^2$ per unit area.

A coin cell was produced using the obtained negative electrode, and the initial charge/discharge efficiency thereof was evaluated.

[Example 4]

A varnish containing 5 parts by mass of binder resin composition 4 and 3 parts by mass of conductive additive (VGCF-H manufactured by Showa Denko K. K.) were kneaded using a compound stirrer for cells (T.K. HIVIS MIX model 2P-03 manufactured by PRIMIX Corporation). To the obtained paste, 92 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was added thereto, and the mixture was further kneaded to prepare a negative electrode mixture paste. The mass ratio between the silicon oxide and the carbon particles, both of which constitute an active material, was 20:80.

The negative electrode mixture paste was applied using an applicator onto copper foil (thickness: 20 μm) which served as a collector, and heat treated for curing under a nitrogen atmosphere at 300°C for 10 minutes, thereby obtaining a negative electrode having the collector and a negative electrode-mixture paste layer being laminated therein. The mass of the active material in the negative electrode-mixture paste layer after drying was 4.1 $mg/cm^2$ per unit area.

A coin cell was produced using the obtained negative electrode, and the initial charge/discharge efficiency thereof was evaluated.

[Example 5]

A varnish containing 5 parts by mass of binder resin composition 5 and 3 parts by mass of conductive additive (VGCF-H manufactured by Showa Denko K. K.) were kneaded using a compound stirrer for cells (T.K. HIVIS MIX model 2P-03 manufactured by PRIMIX Corporation). To the obtained paste, 92 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was added thereto, and the mixture was further kneaded to prepare a negative electrode mixture paste. The mass ratio between the silicon oxide and the carbon particles, both of which constitute an active material, was 20:80.

The negative electrode mixture paste was applied using an applicator onto copper foil (thickness: 20 μm) which

served as a collector, and heat treated for curing under a nitrogen atmosphere at 300°C for 10 minutes, thereby obtaining a negative electrode having the collector and a negative electrode-mixture paste layer being laminated therein. The mass of the active material in the negative electrode-mixture paste layer after drying was 4.2 mg/cm$^2$ per unit area.

A coin cell was produced using the obtained negative electrode, and the initial charge/discharge efficiency thereof was evaluated.

[Example 6]

A varnish containing 5 parts by mass of binder resin composition 6 and 3 parts by mass of conductive additive (VGCF-H manufactured by Showa Denko K. K.) were kneaded using a compound stirrer for cells (T.K. HIVIS MIX model 2P-03 manufactured by PRIMIX Corporation). To the obtained paste, 92 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was added thereto, and the mixture was further kneaded to prepare a negative electrode mixture paste. The mass ratio between the silicon oxide and the carbon particles, both of which constitute an active material, was 20:80.

The negative electrode mixture paste was applied using an applicator onto copper foil (thickness: 20 μm) which served as a collector, and heat treated for curing under a nitrogen atmosphere at 300°C for 10 minutes, thereby obtaining a negative electrode having the collector and a negative electrode-mixture paste layer being laminated therein. The mass of the active material in the negative electrode-mixture paste layer after drying was 4.1 mg/cm$^2$ per unit area.

A coin cell was produced using the obtained negative electrode, and the initial charge/discharge efficiency and the discharge capacity maintenance rate thereof were evaluated.

[Example 7]

A varnish containing 5 parts by mass of binder resin composition 7 and 3 parts by mass of conductive additive (VGCF-H manufactured by Showa Denko K. K.) were kneaded using a compound stirrer for cells (T.K. HIVIS MIX model 2P-03 manufactured by PRIMIX Corporation). To the obtained paste, 92 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was added thereto, and the mixture was further kneaded to prepare a negative electrode mixture paste. The mass ratio between the silicon oxide and the carbon particles, both of which constitute an active material, was 20:80.

The negative electrode mixture paste was applied using an applicator onto copper foil (thickness: 20 μm) which served as a collector, and heat treated for curing under a nitrogen atmosphere at 300°C for 10 minutes, thereby obtaining a negative electrode having the collector and a negative electrode-mixture paste layer being laminated therein. The mass of the active material in the negative electrode-mixture paste layer after drying was 4.1 mg/cm$^2$ per unit area.

A coin cell was produced using the obtained negative electrode, and the initial charge/discharge efficiency and the discharge capacity maintenance rate thereof were evaluated.

[Comparative Example 1]

A varnish containing 5 parts by mass of binder resin composition 3 and 3 parts by mass of conductive additive (VGCF-H manufactured by Showa Denko K. K.) were kneaded using a compound stirrer for cells (T.K. HIVIS MIX model 2P-03 manufactured by PRIMIX Corporation). To the obtained paste, 92 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was added thereto, and the mixture was further kneaded to prepare a negative electrode mixture paste. The mass ratio between the silicon oxide and the carbon particles, both of which constitute an active material, was 20:80.

The negative electrode mixture paste was applied using an applicator onto copper foil (thickness: 20 μm) which served as a collector, and heat treated for curing under a nitrogen atmosphere at 300°C for 10 minutes, thereby obtaining a negative electrode having the collector and a negative electrode-mixture paste layer being laminated therein. The mass of the active material in the negative electrode-mixture paste layer after drying was 4.0 mg/cm$^2$ per unit area.

A coin cell was produced using the obtained negative electrode, and the initial charge/discharge efficiency thereof was evaluated.

[Comparative Example 2]

A varnish containing 10 parts by mass of binder resin composition 3 and 3 parts by mass of conductive additive (VGCF-H manufactured by Showa Denko K. K.) were kneaded using a compound stirrer for cells (T.K. HIVIS MIX model

2P-03 manufactured by PRIMIX Corporation). To the obtained paste, 87 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was added thereto, and the mixture was further kneaded to prepare a negative electrode mixture paste. The mass ratio between the silicon oxide and the carbon particles, both of which constitute an active material, was 30:70.

The negative electrode mixture paste was applied using an applicator onto copper foil (thickness: 20 μm) which served as a collector, and heat treated for curing under a nitrogen atmosphere at 300°C for 10 minutes, thereby obtaining a negative electrode having the collector and a negative electrode-mixture paste layer being laminated therein. The mass of the active material in the negative electrode-mixture paste layer after drying was 3.7 $mg/cm^2$ per unit area.

A coin cell was produced using the obtained negative electrode, and the initial charge/discharge efficiency thereof was evaluated.

[Comparative Example 3]

A varnish containing 10 parts by mass of binder resin composition 3 and 3 parts by mass of conductive additive (VGCF-H manufactured by Showa Denko K. K.) were kneaded using a compound stirrer for cells (T.K. HIVIS MIX model 2P-03 manufactured by PRIMIX Corporation). To the obtained paste, 87 parts by mass in total of silicon oxide (KSC-1064 manufactured by Shin-Etsu Chemical Co., Ltd.) and carbon particles (graphite: MAGD-20 manufactured by Hitachi Chemical Company, Ltd.) were added. NMP was added thereto, and the mixture was further kneaded to prepare a negative electrode mixture paste. The mass ratio between the silicon oxide and the carbon particles, both of which constitute an active material, was 60:40.

The negative electrode mixture paste was applied using an applicator onto copper foil (thickness: 20 μm) which served as a collector, and heat treated for curing under a nitrogen atmosphere at 300°C for 10 minutes, thereby obtaining a negative electrode having the collector and a negative electrode-mixture paste layer being laminated therein. The mass of the active material in the negative electrode-mixture paste layer after drying was 2.1 $mg/cm^2$ per unit area.

A coin cell was produced using the obtained negative electrode, and the initial charge/discharge efficiency thereof was evaluated.

[Comparative Example 4]

A varnish containing 10 parts by mass of binder resin composition 1 and 3 parts by mass of conductive additive (VGCF-H manufactured by Showa Denko K. K.) were kneaded using a compound stirrer for cells (T.K. HIVIS MIX model 2P-03 manufactured by PRIMIX Corporation). To the obtained paste, 87 parts by mass of silicon oxide (KSC-1064 manufactured by Shin-Etsu Chemical Co., Ltd.) was added. NMP was added thereto, and the mixture was further kneaded to prepare a negative electrode mixture paste.

The negative electrode mixture paste was applied using an applicator onto copper foil (thickness: 20 μm) which served as a collector, and heat treated for curing under a nitrogen atmosphere at 300°C for 10 minutes, thereby obtaining a negative electrode having the collector and a negative electrode-mixture paste layer being laminated therein. The mass of the active material in the negative electrode-mixture paste layer after drying was 1.4 $mg/cm^2$ per unit area.

A coin cell was produced using the obtained negative electrode, and the initial charge/discharge efficiency thereof was evaluated.

[Comparative Example 5]

A varnish containing 10 parts by mass of binder resin composition 1 and 3 parts by mass of conductive additive (VGCF-H manufactured by Showa Denko K. K.) were kneaded using a compound stirrer for cells (T.K. HIVIS MIX model 2P-03 manufactured by PRIMIX Corporation). To the obtained paste, 87 parts by mass of a Si active material (metal silicon powder having an average particle diameter of 3 μm, manufactured by Yamaishi Metal Co., Ltd.) was added. NMP was added thereto, and the mixture was further kneaded to prepare a negative electrode mixture paste.

The negative electrode mixture paste was applied using an applicator onto copper foil (thickness: 20 μm) which served as a collector, and heat treated for curing under a nitrogen atmosphere at 300°C for 10 minutes, thereby obtaining a negative electrode having the collector and a negative electrode-mixture paste layer being laminated therein. The mass of the active material in the negative electrode-mixture paste layer after drying was 1.0 $mg/cm^2$ per unit area.

A coin cell was produced using the obtained negative electrode, and the initial charge/discharge efficiency thereof was evaluated. The results are shown in Table 1.

[Comparative Example 6]

A varnish containing 10 parts by mass of binder resin composition 3 and 3 parts by mass of conductive additive (VGCF-H manufactured by Showa Denko K. K.) were kneaded using a compound stirrer for cells (T.K. HIVIS MIX model 2P-03 manufactured by PRIMIX Corporation). To the obtained paste, 87 parts by mass of silicon oxide (KSC-1064 manufactured by Shin-Etsu Chemical Co., Ltd.) was added. NMP was added thereto, and the mixture was further kneaded to prepare a negative electrode mixture paste.

The negative electrode mixture paste was applied using an applicator onto copper foil (thickness: 20 μm) which served as a collector, and heat treated for curing under a nitrogen atmosphere at 300°C for 10 minutes, thereby obtaining a negative electrode having the collector and a negative electrode-mixture paste layer being laminated therein. The mass of the active material in the negative electrode-mixture paste layer after drying was 1.42 mg/$cm^2$ per unit area.

A coin cell was produced using the obtained negative electrode, and the initial charge/discharge efficiency thereof was evaluated.

[Comparative Example 7]

A varnish containing 10 parts by mass of binder resin composition 3 and 3 parts by mass of conductive additive (VGCF-H manufactured by Showa Denko K. K.) were kneaded using a compound stirrer for cells (T.K. HIVIS MIX model 2P-03 manufactured by PRIMIX Corporation). To the obtained paste, 87 parts by mass of a Si active material (metal silicon powder having an average particle diameter of 3 μm, manufactured by Yamaishi Metal Co., Ltd.) was added. NMP was added thereto, and the mixture was further kneaded to prepare a negative electrode mixture paste.

The negative electrode mixture paste was applied using an applicator onto copper foil (thickness: 20 μm) which served as a collector, and heat treated for curing under a nitrogen atmosphere at 300°C for 10 minutes, thereby obtaining a negative electrode having the collector and a negative electrode-mixture paste layer being laminated therein. The mass of the active material in the negative electrode-mixture paste layer after drying was 1.0 mg/$cm^2$ per unit area.

A coin cell was produced using the obtained negative electrode, and the initial charge/discharge efficiency thereof was evaluated. The results are shown in Table 1.

The silicon oxide represented by "SiO" (KSC-1064 manufactured by Shin-Etsu Chemical Co., Ltd.) in the table had a carbon coating and an average particle diameter ($D_{50}$) of 5 μm. The Si active material represented by "Si" (manufactured by Yamaishi Metal Co., Ltd.) in the table was metal silicon powder which had no carbon coating and whose average particle diameter was 3 μm.

The carbon particles represented by "MAGD" (graphite: MAGD-20 manufactured by Hitachi Chemical Company, Ltd.) in the table had an average particle diameter ($D_{50}$) of 20 μm, a total pore volume of 0.02 $cm^3$/g, and an average pore diameter of 29 nm.

The conductive additive represented by "VGCF" (VGCF-H manufactured by Showa Denko K. K.) in the table had a fiber diameter of 150 nm, and an aspect ratio of 10 or more.

"Proportion of Silicon Oxide" in the table is a proportion (mass%) of the mass of the above-described silicon oxide based on 100 mass% of the total mass of the silicon oxide and the carbon particles. "Proportion of Diamine represented by General Formula (I) or (II)" in the table is a proportion (mol%) of a constituent unit derived from an alicyclic diamine compound represented by the above-described general formula (I) or (II) based on 100 mol% of the total of all the constituent units derived from diamine compounds. "Proportion of Binder" in the table is a proportion of the mass of a binder resin composition based on 100 mass% of the total mass of all the material in a negative electrode mixture paste.

[Table 1]

| | Negative Electrode Active Material | | | Conductive Additive | Binder | | | | | Proportion of Binder (%) | Initial Charge/ Discharge Efficiency (%) |
|---|---|---|---|---|---|---|---|---|---|---|---|
| | | | | | Polyimide or Polyamic Acid | | | | Additional Resin | | |
| | Silicon Oxide | Carbon Particles | Proportion of Silicon Oxide (%) | | Diamine Represented by General Formula (I) or (II) | Additional or Other Resin | Proportion of Diamine represented by General Formula (I) or (II) | Tetracarboxylic Dianhydride | | | |
| Ex. 1 | SiO | MAGD | 20.0 | VGCF | 14BAC | - | 100.0 | BPDA | - | 5.0 | 82.7 |
| Ex. 2 | SiO | MAGD | 30.0 | VGCF | NBDA | - | 100.0 | BPDA | - | 10.0 | 75.0 |
| Ex. 3 | SiO | MAGD | 60.0 | VGCF | 14BAC | - | 100.0 | BPDA | - | 10.0 | 75.1 |
| Ex. 4 | SiO | MAGD | 20.0 | VGCF | 14BAC | mBP | 75.0 | BPDA | - | 5.0 | 81.5 |
| Ex. 5 | SiO | MAGD | 20.0 | VGCF | 14BAC | mBP | 50.0 | BPDA | - | 5.0 | 80.8 |
| Ex. 6 | SiO | MAGD | 20.0 | VGCF | NBDA | - | 100.0 | PMDA | - | 5.0 | 82.0 |
| Ex. 7 | SiO | MAGD | 20.0 | VGCF | 14BAC | - | 100.0 | PMDA | PVP | 5.0 | 83.3 |
| Comp. Ex. 1 | SiO | MAGD | 20.0 | VGCF | - | pPD/mBP | 0.0 | BPDA | - | 5.0 | 78.7 |
| Comp. Ex. 2 | SiO | MAGD | 30.0 | VGCF | - | pPD/mBP | 0.0 | BPDA | - | 10.0 | 73.6 |
| Comp. Ex. 3 | SiO | MAGD | 60.0 | VGCF | - | pPD/mBP | 0.0 | BPDA | - | 10.0 | 72.8 |
| Comp. Ex. 4 | SiO | - | - | VGCF | 14BAC | - | 100.0 | BPDA | - | 10.0 | 72.4 |
| Comp. Ex. 5 | Si | - | - | VGCF | 14BAC | - | 100.0 | BPDA | - | 10.0 | 76.3 |
| Comp. Ex. 6 | SiO | - | - | VGCF | - | pPD/mBP | 0.0 | BPDA | - | 10.0 | 74.6 |
| Comp. Ex. 7 | Si | - | - | VGCF | - | pPD/mBP | 0.0 | BPDA | - | 10.0 | 79.8 |

All of Examples 1 to 7 were high-capacity lithium-ion secondary cells. Each of Examples 1 to 7, which had a binder containing a polyimide with a constituent unit derived from a diamine compound represented by general formula (I) or (II), had improved initial charge/discharge efficiency compared to corresponding each of Comparative Examples 1 to 3, which had a proportion of the silicon oxide the same as one of Examples 1 to 7, but did not have the binder containing the above-described polyimide. Although each of Comparative Examples 4 and 5 had a binder containing a polyimide with a constituent unit derived from a diamine compound represented by general formula (I) or (II), the initial charge/discharge efficiency thereof did not improve compared to each of respective Comparative Examples 6 and 7 which had the same type of active material, but did not have a binder containing a polyimide with a constituent unit derived from a diamine compound represented by general formula (I) or (II).

For each of Examples 1 and 6, a coin cell was produced using the above-described positive cell for the counter electrode, and a discharge capacity maintenance rate at 100th cycle was evaluated. The discharge capacity maintenance rate was 90% for the coin cell using a negative electrode of Example 1, which contains 3,3',4,4'-biphenyltetracarboxylic dianhydride as the above-described tetracarboxylic dianhydride, and was 81% for the coin cell using a negative electrode of Example 6, which contains pyromellitic dianhydride as the above-described tetracarboxylic dianhydride.

This application claims priority based on Japanese Patent Application No. 2015-154573, filed on August 4, 2015, the entire contents of which including the claims and the specification are incorporated herein by reference.

Industrial Applicability

The negative electrode mixture paste of the present invention for a lithium-ion secondary cell can be used for the production of a negative electrode of a lithium-ion secondary cell.

## Claims

1. A mixture paste for a negative electrode of a lithium-ion secondary cell, comprising:

   a composition for a binder resin and a negative electrode active material,
   wherein:

   the composition for the binder resin contains a polyamic acid or a polyimide each having a constituent unit derived from a diamine compound and a constituent unit derived from a tetracarboxylic dianhydride,
   the constituent unit derived from the diamine compound including a constituent unit derived from a diamine compound represented by general formula (I) or (II) below:

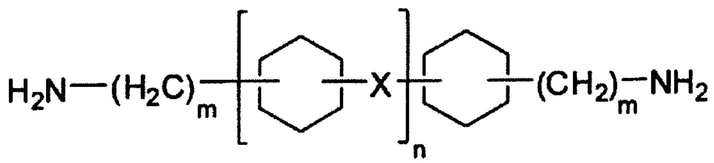

...(I)

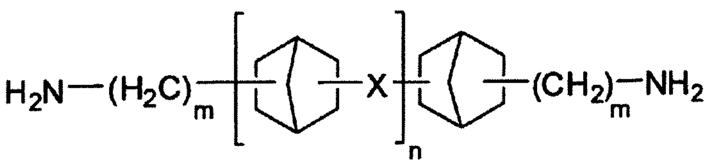

...(II)

   (wherein, in general formula (I) or (II),
   n and two m's are each independently 0 or 1, and
   -X- is a direct linkage, or a divalent group selected from the group consisting of -O-, -S-, $-SO_2-$, -CO-, and $-CH_2-$); and
   the negative electrode active material contains a silicon oxide represented by $SiO_x$ ($0.5 \le x \le 1.5$) and carbon particles.

2. The mixture paste according to claim 1, wherein an amount of the silicon oxide blended in the negative electrode active material is 5 mass% or more and 70 mass% or less based on a total mass of the silicon oxide and the carbon

particles.

3. The mixture paste according to claim 1 or 2, wherein the constituent unit derived from the tetracarboxylic dianhydride includes a constituent unit derived from 3,3',4,4'-biphenyltetracarboxylic dianhydride.

4. The mixture paste according to any one of claims 1 to 3, wherein the composition for the binder resin further contains an alkali metal ion.

5. A negative electrode for a lithium-ion secondary cell, comprising:

a laminate containing a collector and a negative electrode-active material layer,
the negative electrode-active material layer containing a binder resin and a negative electrode active material, wherein:

the binder resin contains a polyimide having a constituent unit derived from a diamine compound and a constituent unit derived from a tetracarboxylic dianhydride,
the constituent unit derived from the diamine compound including a constituent unit derived from a diamine compound represented by general formula (I) or (II) below:

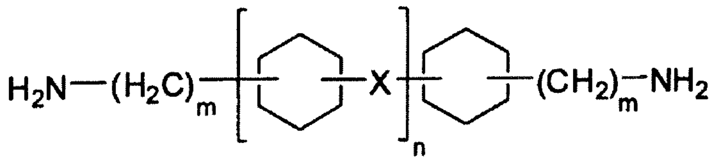

...(I)

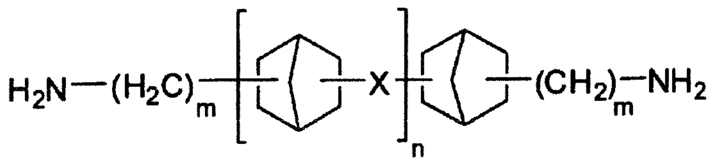

...(II)

(wherein, in general formula (I) or (II),
n and two m's are each independently 0 or 1, and
-X- is a direct linkage, or a divalent group selected from the group consisting of -O-, -S-, $-SO_2-$, -CO-, and $-CH_2-$); and
the negative electrode active material contains a silicon oxide represented by $SiO_x$ ($0.5 \leq x \leq 1.5$) and carbon particles.

6. The negative electrode according to claim 5, wherein an amount of the silicon oxide blended in the negative electrode active material is 5 mass% or more and 70 mass% or less based on a total mass of the silicon oxide and the carbon particles.

7. The negative electrode according to claim 5 or 6, wherein, in the binder resin, the constituent unit derived from the tetracarboxylic dianhydride includes a constituent unit derived from 3,3',4,4'- biphenyltetracarboxylic dianhydride.

8. A method for producing a negative electrode for a lithium-ion secondary cell, which comprises:

applying the mixture paste according to any one of claims 1 to 4 on a collector, and
subjecting the collector having the mixture paste applied thereon to heating treatment.

9. The method according to claim 8, wherein the heating treatment is performed at a heating temperature of 200°C or more and 350°C or less.

10. A lithium-ion secondary cell provided with a positive electrode, a negative electrode and an electrolyte, the positive and negative electrodes being capable of absorption and desorption of lithium ions,
wherein the negative electrode is the negative electrode according to any one of claims 5 to 7.

**INTERNATIONAL SEARCH REPORT**

International application No. PCT/JP2016/072800

A. CLASSIFICATION OF SUBJECT MATTER

*H01M4/139*(2010.01)i, *H01M4/13*(2010.01)i, *H01M4/133*(2010.01)i, *H01M4/1393*(2010.01)i, *H01M4/36*(2006.01)i, *H01M4/48*(2010.01)i, *H01M4/62*(2006.01)i

According to International Patent Classification (IPC) or to both national classification and IPC

B. FIELDS SEARCHED

Minimum documentation searched (classification system followed by classification symbols)

H01M4/139, H01M4/13, H01M4/133, H01M4/1393, H01M4/36, H01M4/48, H01M4/62

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | WO 2009/069688 A1 (Mitsui Chemicals, Inc.), 04 June 2009 (04.06.2009), & JP 5462631 B2 & US 2010/0304160 A1 & EP 2218754 A1 | 1-10 |
| A | JP 2012-204203 A (Mitsui Chemicals, Inc.), 22 October 2012 (22.10.2012), (Family: none) | 1-10 |
| A | WO 2013/008437 A1 (Mitsui Chemicals, Inc.), 17 January 2013 (17.01.2013), & JP 5735989 B2 & US 2013/0288120 A1 & EP 2612879 A1 | 1-10 |

☐ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 06 October 2016 (06.10.16) | 18 October 2016 (18.10.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10312791 B
- JP 2011040326 A
- JP 2010238562 A
- JP 2011086480 A
- WO 2010150513 A
- WO 2011040308 A
- JP 2011142068 A
- JP 2011216320 A
- JP 2011060676 A
- JP 2015154573 A


### Non-patent literature cited in the description


- *J. Mater. Chem,* 2010, vol. 20, 5404-5410